# EUROPEAN PATENT SPECIFICATION

(11) **EP 2 667 667 B1**
(45) Date of publication and mention of the grant of the patent: **30.09.2015**
(21) Application number: 12737075.7
(22) Date of filing: 19.01.2012
(51) Int. Cl.: H04W 52/02

(54) **PROCESSING METHOD, COMMUNICATING METHOD, AND DEVICE**
VERARBEITUNGSVERFAHREN, KOMMUNIKATIONSVERFAHREN UND VORRICHTUNG DAFÜR
PROCÉDÉ DE TRAITEMENT, PROCÉDÉ DE COMMUNICATION, ET DISPOSITIF

(30) Priority: 19.01.2011 CN 201110021887; 21.03.2011 CN 201110067798
(43) Date of publication of application: 27.11.2013
(73) Proprietor: Huawei Technologies Co., Ltd., Longgang District Shenzhen, Guangdong 518129 (CN)
(72) Inventor: QUAN, Wei, Shenzhen Guangdong 518129 (CN); CHEN, Yuhua, Shenzhen Guangdong 518129 (CN); HAN, Guanglin, Shenzhen Guangdong 518129 (CN)
(74) Representative: Körber, Martin Hans
(86) International application number: PCT/CN2012/070615
(87) International publication number: WO 2012/097748

(56) References cited:
- EP-A1- 2 079 264
- EP-A2- 2 104 294
- CN-A- 101 730 207
- CN-A- 101 809 898
- CN-A- 101 932 023

## Description

### FIELD OF TECHNOLOGY

The present invention relates to the technical field of communications and, in particular, to a processing method, a communicating method and devices.

### BACKGROUND

A UE (User Equipment, user equipment) in a DRX (Discontinuous Reception, discontinuous reception) state means that the receiver and the transmitter of the UE are in an ON state only at certain times while in an OFF state at other times, thus the power-saving effect can be achieved. In an LTE (Long Term Evolution, long term evolution) system, DRX can be applied on a UE in an idle state, and can also be applied on a UE in a connected state.

When the UE is in the connected state, eNB (evolved NodeB, evolved NodeB) can configure the DRX for the UE, which includes configuring a DRX cycle and a time point (DRX Offset) for entering a routine active period (On Duration) of the UE in each cycle, and the duration time of remaining On Duration, i.e., time length. The UE, according to the preset On Duration and DRX Offset, wakes up periodically to intercept PDCCH (Physical Downlink Control Channel, physical downlink control channel) commands belonging to the UE itself. The UE configured with the DRX can be in a non-active state and an active state. When the UE is in the active state (namely at an active time), the UE will intercept the PDCCH commands belonging to the UE itself, but when the UE in the non-active state, the UE will not intercept the PDCCH commands belonging to the UE itself, and the receiver will usually be in the OFF state, unless a paging message or a system broadcast message is needed to be intercepted at this time.

When the UE in the active state receives a PDCCH command instructing the UE to perform new data transceiving, the UE will prolong the time of remaining in the active state of the UE, so that the UE can perform the data transceiving in a subsequent time.

In the LTE system, when the UE intercepts the PDCCH commands belonging to the UE itself in the active state, a blind detection is needed to detect whether there is the PDCCH commands belonging to the UE itself, so as to determine whether to remain in the active state. In the existing implementations of determining, by the UE, whether to remain in the active state based on interception, the UE needs to be in the listening state for a long time and, thus, the power-saving effect of the UE is reduced.
see for example document EP 2104294.

### SUMMARY

Embodiments of the present invention provide a processing method, a communicating method and devices, which can improve the power-saving effect of a UE.

To achieve the above object, embodiments of the present invention provide technical solutions as follows:
A processing method, where a user equipment in a connected state is configured with a discontinuous reception, and the discontinuous reception includes a deep, discontinuous reception, and the method includes:
   when the user equipment is in a routine active state of the deep discontinuous reception state, and is not in a triggered active state, detecting, by the user equipment, downlink transmission notification information belonging to the user equipment within only a common search space between the common search space and a specific search space of each transmission time interval; and
   performing, by the user equipment, a processing according to the downlink transmission notification information upon detection of the downlink transmission notification information belonging to the user equipment.
A user equipment includes:
   a state configuring unit, configured to configure a discontinuous reception according to an instruction in a connected state, wherein the discontinuous reception comprises a deep discontinuous reception;
   an executing unit, configured to enter a deep discontinuous reception state according to a set parameter of the deep discontinuous reception configured by the state configuring unit;
   a detecting unit, configured to detect downlink transmission notification information belonging to the user equipment within only a common search space between the common search space and a specific search space of each transmission time interval, when the executing unit enters a routine active state of the deep discontinuous reception state, and is not in a triggered active state; and
   a processing unit, configured to perform a processing according to the downlink transmission notification information when the downlink transmission notification information belonging to the user equipment is detected by the detecting unit.
A communicating method includes:
   configuring, by a base station, a discontinuous reception for a user equipment in a connected state, where the discontinuous reception includes a deep, discontinuous reception;
   transmitting, by the base station, downlink transmission notification information of the user equipment within only a common search space between the common search space and a specific search space of one or more transmission time intervals when the user equipment is in a routine active state of the deep discontinuous reception state, and is not in a triggered active state, so as to notify the user equipment to perform a processing according to the downlink transmission notification information.
A base station includes:
   a configuring unit, configured to configure a discontinuous reception for a user equipment in a connected state, where the discontinuous reception includes a deep, discontinuous reception;
   a transmitting unit, configured to transmit downlink transmission notification information of the user equipment within only a common search space between the common search space and a specific search space of one or more transmission time intervals when the user equipment is in a routine active state of the deep discontinuous reception state, and is not in a triggered active state, so as to notify the user equipment to perform a processing according to the downlink transmission notification information.

According to the communicating method and device provided by embodiments of the present invention: when the user equipment in a connected state is configured with and enters a deep discontinuous reception state, and is in a routine active state of the deep discontinuous reception, and is not in a triggered active state, the user equipment detects downlink transmission notification information belonging to the user equipment within only a common search space between the common search space and a specific search space of each transmission time interval, and performs a processing according to the downlink transmission notification information upon detection of the downlink transmission notification information belonging to the user equipment. Since the UE does not need to detect scheduling commands belonging to the UE itself within its own specific search space and, additionally, the number of times the UE detects the common search space is very limited, therefore, the method can reduce the interception/detection behaviors significantly by limiting the search time and search space and, thus, the power-saving effect of the user equipment is improved.

### BRIEF DESCRIPTION OF THE DRAWINGS

To make the technical solutions of the present invention more clearly, the accompanying drawings used in description of embodiments of the present invention are briefly described hereinafter. Apparently, the accompanying drawings illustrate only some embodiments of the invention, and persons skilled in the art can derive other drawings from these drawings without creative efforts.
FIG. 1 is a schematic state diagram of entering, by a UE, a Long DRX cycle from a Short DRX cycle according to an embodiment of the present invention;
FIG. 2 is a schematic flow chart of a processing method according to an embodiment of the present invention;
FIG. 3 is a schematic diagram of entering, by a UE, a short DRX cycle, a long DRX cycle and a deep DRX cycle according to an embodiment of the present invention;
FIG. 4 is a schematic comparison diagram of entering, by a UE, a Long DRX cycle from a Short DRX cycle according to the prior art and an embodiment of the present invention;
FIG. 5 is a schematic comparison diagram of entering, by a UE, a Deep DRX cycle from a Long DRX cycle according to the prior art and an embodiment of the present invention;
FIG. 6 is a schematic comparison diagram of entering, by a UE, a Short DRX cycle and a Long DRX cycle, respectively, after completing uplink data transmission according to the prior art and an embodiment of the present invention;
FIG. 7 is a schematic structural diagram of a user equipment according to an embodiment of the present invention; and
FIG. 8 is a schematic structural diagram of a base station according to an embodiment of the present invention.

### DESCRIPTION OF EMBODIMENTS

The technical solutions in embodiments of the present invention are hereinafter described clearly and completely with reference to the accompanying drawings in embodiments of the present invention. Obviously, the described embodiments are only a part of embodiments of the present invention, rather than all embodiments of the present invention. All the other embodiments obtained by persons skilled in the art based on embodiments of the present invention without any creative efforts shall fall within the protection scope of the present invention.

Active states of a UE may include a routine active state and a triggered active state. With regard to the routine active state, generally, it may be entered by the UE according to the DRX cycle normally, that is, the routine active state is a state in the DRX cycle; With regard to the triggered active state, it may be entered by the UE when determining there is data to be transceived in the routine active state. The routine active state and the triggered active state may be overlapped in time. For example, after a DRX is configured, the routine active state can be entered according to a on Duration Timer (timer for the routine active period), and the triggered active state can be entered according to a drx-Inactivity timer (Discontinuous Reception-Inactivity Timer, discontinuous reception-inactivity timer), a drx-Retransmission timer (Discontinuous Reception-Retransmission Timer, discontinuous reception- retransmission timer), or other conditions.

The eNB can configure a Long DRX cycle and a Short DRX cycle for the UE, where the Long DRX cycle may be an integer multiple of the Short DRX cycle. When the UE is configured with the two DRX cycles at the same time, the UE will enter the Short DRX state firstly when there is no data to be transceived. The so-called entering the Short DRX state indicates that the UE will perform operations according to set parameters of the Short DRX, such as a cycle, a routine activation time point and time length of the Short DRX. If there is no data to be transceived within pre-configured multiple Short DRX cycles after entering the Short DRX, the UE enters the Long DRX state. The so-called entering the Long DRX state indicates that the UE will perform operations according to the set parameters of the Long DRX, such as a cycle, a routine activation time point and time length of the Long DRX.

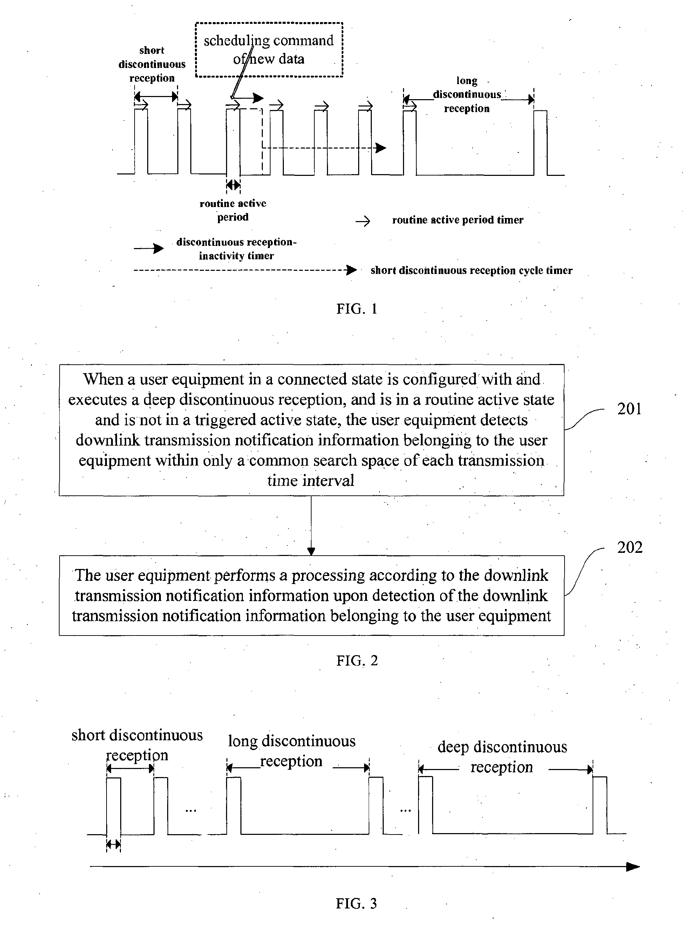

Based on the above configuration, when entering the Short DRX state, the UE will wake up periodically to intercept scheduling commands belonging to the UE itself (i.e., in a routine active state), as shown in FIG. 1, when the on Duration Timer starts, the UE enters the routine active state. If a scheduling command of new data transmission from the eNB is received, the UE starts a drx-Inactivity Timer and enters the triggered active state, as shown in FIG. 1, at this time, the UE may be still in the routine active state started by the on Duration Timer, namely, the routine active state and the triggered active state are overlapped. If the scheduling command of the new data transmission from the eNB is received again during this time period, the UE re-starts the drx-Inactivity Timer, which is equivalent to prolonging the time length in the active state; after the drx-Inactivity Timer expires, the UE enters again the Short DRX state. After several Short DRX cycles after entering the Short DRX state, the UE may also enter the Long DRX state.

Based on the above analysis, in order to improve the power-saving effect of the UE, embodiments of the present invention provide a communicating method, as shown in FIG. 2, including:

201: For a user equipment in a connected state configured with a deep discontinuous reception (Deep DRX) and executing the deep DRX state, when the UE is in a routine active state of the Deep DRX, and is not in a triggered active state, the UE detects downlink transmission notification information belonging to the UE within only a common search space between the common search space and a specific search space of each transmission time interval during this time period.

The so-called entering the Deep DRX state indicates that UE will periodically intercept relevant commands according to set parameters such as a cycle, a routine activation time point and a time length of the Deep DRX.

The step 201 is primarily directed to the case that the UE is in the routine active state, and is not in the triggered active state. Of course, the UE can also detect within the common search space when the UE is in the routine active state, regardless of whether the UE is in the triggered active state.

The Deep DRX can be configured by referring to the DRX in which a UE in an idle (IDLE) state receives a paging (Paging) message, namely, the Deep DRX can have the same DRX cycle, the same duration time of the routine active state, i.e., the time length, and/or the same time point for entering the On Duration with the UE in the idle state.

Or, parameters of the Deep DRX and parameters of the Long DRX are the same, but the operations of the eNB and the UE in each transmission time interval during the time period when the UE is in the routine active state of the Deep DRX and is not in the triggered active state are different from the operations of the eNB and UE in the active state of the Long DRX. For example, as described above, when the UE is in the routine active state of the Deep DRX, and is not in the triggered active state, the UE performs interception within only the common search space between the specific search space and the common search space of each transmission time interval. With regard to the long DRX, the UE performs interception in both the common search space and the specific search space, and the like, during all the active time.

Of course, the UE in the connected state can also be configured with other DRXs, such as a Short DRX, a Long DRX, and so on.

Correspondingly, when the UE enters the DRX state, the UE may enter the Short DRX state firstly, and if the UE has no data to be transmitted within several Short DRX cycles (the Short DRX cycle is pre-configured) after entering the Short DRX state, the UE will enter the Long DRX state. In embodiments of the present invention, if the UE has been configured with the Deep DRX by the eNB, and has no data to be transmitted within a period of time (which can be pre-configured) after entering the Long DRX state, the UE can enter the Deep DRX state. When the UE enters the Deep DRX state from the Long DRX state, the time length from entering the Long DRX state to entering the Deep DRX state may be specified by a protocol, or may be configured by the eNB. Furthermore, the time value for executing the Long DRX by the UE may be set as a period of time, or set as a multiple of the Long DRX cycle.

For example, when UE is in the routine active state of the Deep DRX, and is not in the triggered active state, after receiving a PDCCH command transmitted from the eNB to the UE for new data scheduling, the UE will enter the triggered active state to receive data by starting the drx-Inactivity Timer, or the like. Thereafter, if there is no data transmission within a period of time, the UE enters the Short DRX state, and if the UE has no data transmission within a period of time after entering the Short DRX state, the UE enters the Long DRX state, and if the UE has no data transmission within a period of time after entering the Long DRX state, the UE enters the Deep DRX state, see FIG. 3 for details.

Of course, the UE may also enter the Long DRX state firstly, and then if there is no data transmission, enter the Deep DRX state; or enter the Short DRX state firstly, and then if there is no data transmission, enter the Deep DRX state; or only enter the Deep DRX state, and so on.

It should be noted that, the entering the DRX state mentioned in description of embodiments of the present invention, may also be referred to as executing DRX operations, both of them have the same meanings.

Besides, regardless of how the UE enters each DRX state, for the above step 201, the UE should be in routine active state of the Deep DRX state, and not in the triggered active state when executing the step 201.

With regard to configuring the Deep DRX for the UE, for example, the eNB may configure relevant parameters of the Deep DRX for the UE in the connected state through an RRC reconfiguration message or a system broadcast message. When the eNB has configured the relevant parameters of the Deep DRX for the UE in the connected state and the UE has entered the Deep DRX state, as described above, the UE detects the downlink transmission notification information belonging to the UE transmitted through the common search space by the eNB within the common search space within a specific active time.

The UE, which is in a routine active state and is not in a triggered active state, may detect the downlink transmission notification information belonging to the UE within only a CCS between a dedicated search space (DSS, Dedicated Search Space) and a common search space (CSS, Common Search Space) of each transmission time interval (TTI), within only the CSS through at least the following manners:
a. When the UE is in the routine active state, and is not in the triggered active state, the UE detects a PDCCH command scrambled with a cell-radio network temporary identity (C-RNTI, Cell-Radio Network Temporary Identity) of the UE within only the CSS between the DSS and the CSS of each TTI.
   For example, when the eNB needs to schedule the downlink data of the UE, the eNB sends the PDCCH command scrambled with the C-RNTI to the UE within the CSS of one or more TTIs when the UE is in the routine active state and is not in the triggered active state, so as to notify the downlink resource of the UE. Correspondingly, the UE detects the PDCCH command scrambled with the C-RNTI of the UE within the CCS of each TTI when the UE is in the routine active state and is not in the triggered active state.
b. When the UE is in the routine active state, and is not in the triggered active state, the UE detects a paging (Paging) message carrying an ID of the UE and a downlink data receiving indication identifier within only the CSS between the DSS and the CSS of each TTI.
   For example, when the eNB needs to schedule the downlink data of the UE, the eNB carries the ID (such as a C-RNTI, an S-TMSI) of the UE and the downlink data receiving indication identifier in the Paging message within the CSS of one or more TTIs when the UE is in the routine active state and is not in the triggered active state, so as to notify UE to receive downlink data. Correspondingly, the UE detects the Paging message carrying the ID of the UE and the downlink data receiving indication identifier within the CCS of each TTI when the UE is in the routine active state and is not in the triggered active state.
c. When the UE is in the routine active state, and is not in the triggered active state, the UE detects a Paging message carrying the ID of the UE and downlink data resource allocation information within only the CSS between the DSS and the CSS of each TTI.
   For example, when the eNB needs to schedule the downlink data of the UE, the eNB carries the ID of the UE (such as a C-RNTI, an S-TMSI (System Architecture Evolution-Temporary Mobile Subscriber Identifier, system architecture evolution-temporary mobile subscriber identifier)) and the corresponding downlink data resource allocation information in the Paging message within the CSS of one or more TTIs when the UE is in the routine active state and is not in the triggered active state, so as to notify UE to receive the downlink data. Correspondingly, the UE detects the Paging message carrying the ID of the UE and the downlink data resource allocation information within the CCS of each TTI when the UE is in the routine active state and is not in the triggered active state.
d. When the UE is in the routine active state, and is not in the triggered active state, the UE detects a Paging message carrying the ID of the UE and the downlink data within only the CSS between the DSS and the CSS of each TTI.

For example, when the eNB needs to schedule the downlink data of the UE, the eNB carries the ID (such as a C-RNTI, an S-TMSI) of the UE and the corresponding downlink data in the Paging message within the CSS of one or more TTIs, when the UE is in the routine active state and is not in the triggered active state. Correspondingly, the UE detects the Paging message carrying the ID of the UE and the downlink data within the CCS of each TTI when the UE is in the routine active state, and is not in the triggered active state.

Furthermore, the above several manners can be used alone or in combination, thus the flexibility of scheduling is increased. For example, in a combination of a and b, the UE not only needs to intercept the PDCCH command belonging to the UE itself within the CSS, but also needs to intercept whether there is information instructing the UE to receive data in the paging message; in a combination of a and c, the UE not only needs to intercept the PDCCH command belonging to the UE itself within the CSS, but also needs to intercept whether there is data to be received by the UE in the paging message; in a combination of b and c, the UE not only needs to intercept whether there is information indicating the UE to receive data in the paging message, but also needs to intercept whether there is data to be received by the UE in the paging message; in a combination of a, b and c, the UE not only needs to intercept the PDCCH command belonging to the UE itself within the CSS, but also needs to intercept whether there is information indicating the UE to receive data in the paging message and whether there is its data to be received by the UE in the paging message; other combinations are similar to those of the above, and are not described herein. It should be noted that, although the above manners can be used in combination, the UE needs to try receiving them simultaneous, however, since the base station usually transmits relevant instructions only in one manner at a time, the UE can obtain the data or the indication information belonging to the UE itself only in one manner.

202, The user equipment performs a processing according to the downlink transmission notification information upon detection of the downlink transmission notification information belonging to the user equipment.

For example, the UE can determine that there is a PDCCCH belonging to the UE itself upon detection of the PDCCH command scrambled with the C-RNTI of the UE. If knowing there is downlink data to be received according to the detected PDCCH, the UE enters the triggered active state by starting the drx-Inactivity Timer, or the like, and receives the downlink data.

Of course, the UE can also leave the Deep DRX state after knowing that there is downlink data to be received. The UE can also perform a corresponding feedback after receiving the downlink data.

For convenience, in the following processing manners, the processing performed after the UE knows there is downlink data to be transmitted is directly described as leaving the Deep DRX state, entering the triggered active state, receiving the downlink data and performing corresponding feedback. Persons skilled in the art can know from the description that, leaving the Deep DRX state, and performing the feedback are only optional steps.

Or, the UE can also know there is downlink data to be received upon detection of the Paging message carrying the ID of the UE and the downlink data receiving indication identifier, leave the Deep DRX state, enter the triggered active state by starting the drx-Inactivity Timer and the like, intercept possible PDCCH in the subsequent TTIs, receive the downlink data according to the downlink data resource allocation information carried in the subsequent intercepted PDCCH, and perform the corresponding feedback.

Or, the UE can also know there is downlink data to be received upon detection of the Paging message carrying the ID of the UE and the downlink data resource allocation information, exit the Deep DRX state, enter the triggered active state by starting the drx-Inactivity Timer and the like, receive the downlink data according to the downlink data resource allocation information carried in the Paging message, and perform the corresponding feedback.

Furthermore, UE needs to spend time parsing the Paging message to know whether there is downlink data to be received by the UE, therefore, a time difference between the downlink data and the Paging message may be specified, such as four TTIs, and the time difference may be set in the standard, and may also be configured by the eNB. For example, after receiving the paging information in TTI n, the UE receives the corresponding downlink data in TTI n+4 according to the downlink data resource allocation information carried in the Paging message.

Or, the UE can also obtain the downlink data carried in the Paging message upon detection of the paging message carrying the ID of the UE and the downlink data, exit the Deep DRX state, enter the triggered active state by starting the drx-Inactivity Timer and the like, and perform the corresponding feedback. With regard of the feedback, for example, the UE receives the Paging message and the downlink data carried by the Paging message at time n, and the UE may perform the feedback at time n+4, and may also perform the feedback after time n+4.

The several processing described above is primarily directed to performing data receiving according to the downlink transmission notification information in step 202.

Furthermore, with regard to performing the processing according to the downlink transmission notification information in step 202, when the eNB needs to schedule the downlink data of the UE but the UE is out of synchronization in the uplink, the random access of the UE may be triggered through at least one or a combination of the following manners:
a. When the UE is in the routine active state and is not in the triggered active state, and the PDCCH command scrambled with the C-RNTI of the UE is detected within a CCS of a certain TTI, the UE enters the triggered active state according to the PDCCH command, and performs random access operations of UE according to a random access command carried in the PDCCH command.
   For example, when eNB needs to schedule the downlink data of the UE but the UE is out of synchronization in the uplink, the eNB sends the PDCCH command scrambled with the C-RNTI to the UE and carrying random access command within the CSS in a certain TTI when the UE is in the routine active state and is not in the triggered active state, so as to notify the UE to perform the random access. After knowing that eNB asks the UE to perform the random access, the UE performs the random access process.
b. When the UE is in the routine active state, and is not in the triggered active state, and the Paging message carrying the ID of the UE and a out-of-sync adjustment indication identifier is detected within a CCS of a certain TTI, wherein the out-of-sync adjustment indication identifier is used to indicate there is downlink data to be received, and the UE is currently in the uplink out-of-sync state, the UE performs random access operations.

For example, when eNB needs to schedule the downlink data of the UE but the UE is out of synchronization in the uplink, the eNB carries the ID (such as a C-RNTI, an S-TMSI) of the UE and the out-of-sync adjustment indication identifier described above in the Paging message within the CSS in a certain TTI when the UE is in the routine active state and is not in the triggered active state, wherein the out-of-sync adjustment indication identifier is used to indicate there is downlink data to be received by the UE and the UE is out-of-sync in the uplink as described above, so as to notify the UE to perform random access. After knowing that eNB asks the UE to perform the random access, the UE performs the random access process.

Furthermore, the above two manners for triggering the random access of the UE can be used alone or in combination, when used in combination, the UE not only needs to intercept the random access indication in the PDCCH command scrambled with the C-RNTI of the UE, but also needs to intercept the random access indication in the Paging message, thus the flexibility of scheduling is increase. Of course, because the base station usually sends relevant instructions only in one manner at a time, the UE can obtain the data or the indication information belonging to the UE itself only in one manner.

Furthermore, with regard to the above step 202, if UE knows that the packet transmitted by the UE is just like a heart beat (Heart Beat) packet and/or a packet in responding to the heart beat, there is no data to be transmitted and received within a period of time after the UE completes the data transmission, that is, the triggered active state is finished. At this time, UE can remain the Deep DRX state, rather than considering leaving the Deep DRX state, thus the electric energy can be saved in further.

Of course, in another case, the UE leaves the Deep DRX state when entering the triggered active state in step 202. In this case, after the UE completes the uplink data transmission; or after the UE sends an empty BSR; or after the UE completes the data transmission and confirms there is no data to be transmitted based on the sent packet or other information; or after the UE receives a UL grant (Uplink Grant) of eNB and sends a MAC PDU (Media Access Control Protocol Data Unit, media access control protocol data unit) without carrying any MAC SDU (Media Access Control Service Data Unit, media access control service data unit) when the UE does not request the uplink resource and also confirms there is no data to be transmitted based on the sent packet or other information, the UE may report a message to the eNB to request to enter the Deep DRX state. The reported message may be a RRC message or a MAC CE (Media Access Control Control Unit, media access control control element).

After the eNB receives the message reported by the UE, if the eNB determines likewise that no downlink data is needed to be transmitted to the UE based on the transmitted packet or other information, the eNB can notify the UE to enter the Deep DRX state directly. After the UE receives the notification of entering the Deep DRX state transmitted by the eNB, the UE enters the deep DRX state directly without entering the Short DRX and the Long DRX. Thereby, a more power-saving mode can be entered quickly, and the power-saving effect can be improved. In the above, the notification message may be a RRC message or a MAC CE.

Optionally, eNB can directly notify the UE to enter the deep DRX state directly, without waiting the request for entering the Deep DRX state from the UE. Or, after the UE reports a message to request to enter the Deep DRX state, the UE can enter the deep DRX state directly without receiving the response of eNB. The triggering manner for entering the Deep DRX state directly of the UE can be configured by a protocol, or configured by the eNB. Similarly, in this embodiment, the Deep DRX may be replaced with the Long DRX, that is, the UE can enter the Long DRX state directly without entering the short DRX when the above specified conditions are satisfied; or the eNB can directly notify the UE to enter the Long DRX state directly, without waiting the request for entering the Long DRX state from the UE, which can also achieve certain power-saving effect.

In addition to the above processing, when the UE has no data to be transmitted or received, the UE may reduce the measuring requirement appropriately. The UE performs channel condition measurement during the active time, for example, the UE may measure one or more of the following: absolute values path-loss and/or change values of path-loss, absolute values of reference signal received power (RSRP) and/or change values of RSRP, absolute values of reference signal received quality (RSRQ) and/or change values of RSRQ, if the change amount among measurement results within a specified number of measuring cycles is less than a specified threshold value, it indicates that the signal quality of the UE is relatively good and stable, and if the UE has no data to be transmitted at this time, the measuring requirement of the UE can be reduced without affecting the mobility of the UE. Where, the number of the measuring cycle, the measured object, and the threshold value, which are used for evaluating absolute value and/or change value of the measured quantities, can be set by a protocol, or configured by the eNB and the like. Furthermore, UE can also determine whether the signal quality of the UE is relatively good and stable according to one or more of the following judgment conditions: whether the change amount among the measurement results within a specified number of measuring cycles is less than a specified threshold value, whether the absolute value of the signal quality of the signal serving cell is higher than a specified threshold value and whether the signal quality value of adjacent cells is less than a specified threshold value. Therefore, whether the UE can enter the Deep DRX state may be determined by adding the judgment on the measurement result.

For example, taking the path-loss change value as the measured object, if the eNB has configured a Deep DRX, the number of the measuring cycle and the threshold value for evaluating the measurement change for the UE, the UE, after executing a specified time of the Long DRX, may determine whether the change value of the path-loss within the pre-specified number of measuring cycles is less than the configured threshold value. If determining that the change value of the path-loss within the pre-specified number of measuring cycles is less than the configured threshold value, the UE enters the Deep DRX state. Otherwise, UE continues to execute the Long DRX, until the condition that the change value of the path-loss within the pre-specified number of measuring cycles is less than the configured threshold value is satisfied.

Or, when the UE completes the data transmission and requests to enter the Deep DRX state directly, the UE determines whether the change value of the path-loss within the pre-specified number of measuring cycles is less than the configured threshold value. If determining that the change value of the path-loss within the pre-specified number of measuring cycles is less than the configured threshold value, the UE enters the Deep DRX enters. Otherwise, the UE enters the Short DRX state firstly, and enters the Long DRX state when no data is needed to be transmitted within a specified time period after entering the Short DRX cycle, and enters the Deep DRX state when no data is needed to be transmitted within a specified time period after entering the Long DRX cycle.

Optionally, if the UE still has no data needed to be transmitted within a specified time period after entering the Long DRX cycle, the UE can determine whether the change value of the path-loss within the pre-specified number of measuring cycles is less than the configured threshold value. If the UE determines that the change value of the path-loss within the pre-specified number of measuring cycles is less than the configured threshold value, the UE enters the Deep DRX state. Otherwise, the UE continues to execute the Long DRX, until the condition that the change value of the path-loss within the pre-specified number of measuring cycles is less than the configured threshold value is satisfied. Also, when the UE enters the Long DRX state from the Short DRX state , the processing as similar as the above can be adopted.

Optionally, the measured absolute value may be utilized or the measured absolute value and the measured change value may be utilized to determine whether to enter the Deep DRX, if other conditions remain unchanged as above, the UE can enter the Deep DRX when the change value of the measurement is less than the corresponding threshold, and meanwhile the absolute value is better than a certain threshold. Otherwise, the UE can enter the Short DRX state, the Long DRX state and the Deep DRX state in sequence.

Similarly, the Deep DRX can be replaced with the Long DRX, and the UE can enter the Long DRX directly after the measuring condition is satisfied.

As mentioned above, when the UE has no data to be transmitted or received, the UE may reduce the measuring requirement appropriately. This solution is not limited to the scenario in this embodiment, and can be used alone to achieve the purpose of power-saving. Furthermore, when the UE has no data to be transmitted or received, the measuring cycle of the UE can also be prolonged. For example, the UE can execute the measurement in the idle (IDLE) state. In normal case, when the UE is in the idle state, the measuring cycle thereof is a multiple of the DRX cycle, for example, when the DRX cycle is 2.56s, the time for reporting the measurement result from the physical layer to the RRC layer of the UE is a multiple of the DRX cycle, such as 2.56s*5, that is, the multiple is 5. Or, the measuring cycle may be longer.

In some scenario, such as at night, the user is generally in a sleep state, and usually seldom initiates any service actively, and the movement of the UE generally won't occur. In this case, if the measuring requirement is reduced and the measuring cycle is prolonged, the signal quality of the UE can be assured and meanwhile the power can be saved.

Based on this, when the absolute value of the measurement results within the pre-specified number of measuring cycles of the UE satisfies a certain condition and/or the change value of the measurement results is less than a threshold value, the UE can reduce the measuring requirement, that is, prolong the measuring cycle into n multiples of the original measuring cycle. The measuring result may be one or more of the following: absolute values of path-loss and/or change values of path-loss, absolute values of reference signal received power (RSRP) and/or change values of RSRP, absolute values of reference signal received quality (RSRQ) and/or change values of RSRQ. The number of the measuring cycle, the measured object, the threshold value and N value of the change multiple of the measuring cycle, which are used for evaluating absolute value and/or change value of the measurement, can be set by a protocol, or configured by the eNB. Optionally, there may be a plurality of N values, from small to big, when the change value of the measuring result is continuously less than the threshold value, the measuring cycle can be prolonged gradually.

Furthermore, if the UE finds that the absolute value of the measurement results within the pre-specified number of measuring cycles doesn't satisfy the above conditions (or satisfies another set of conditions), and/or the change value among the measuring results is more than threshold value when executing the N multiples of the measuring cycle, the UE may directly shorten the measuring cycle to the measuring cycle in the prior art, and may also reduce the N value of the multiple of the measuring cycle, and shorten the measuring cycle gradually when the absolute value of the measurement results doesn't satisfy the above conditions (or satisfies another set of conditions), and/or the change value among the measuring results is continuously greater than the threshold value, until the measuring cycle is shortened to the measuring cycle in the prior art.

Similar to reducing the measurement, with regard to the UE in the idle state, when the condition is satisfied, the UE can prolong the cycle of periodical location area update (TAU, Tracking Area Update) to N multiples of the original, so as to reduce the times of reporting TAU of the UE, and reduce the power consumption of the UE caused by entering the connected state, sending the TAU, releasing the connection and returning to the idle state. Wherein, the N value of the multiple can be set by a protocol, or configured by the eNB.

Furthermore, in consideration of the time delay, the eNB may perform a blind scheduling on the UE in the case of no scheduling request of the UE is received, and allocate a UL Grant (Uplink Grant, uplink grant) for the UE, at this time the UE has neither data to be transmitted nor data which can be transmitted, therefore, the UE will carry a Padding (padding) and an empty BSR (Buffer Status Report, buffer status report) in the transmitted MAC PDU. If a DRX is configured, the UE will start the drx-Inactivity Timer to enter the triggered active state after a UL grant for new data transmission is received, and then execute again the Short DRX and the Long DRX when no data is received for a period of time. After the Deep DRX is configured, the UE can also enter the Deep DRX. However, this will extend the time of the UE for entering the Long DRX, even the Deep DRX, and thus the power consumption of the UE is increased.

In this case, when the UE executes the DRX (Short DRX, or Long DRX), if the UE receives the uplink scheduling from the eNB, but has no data to be transmitted, the UE will continue to execute count of the relevant counter, rather than re-start the relevant counter.

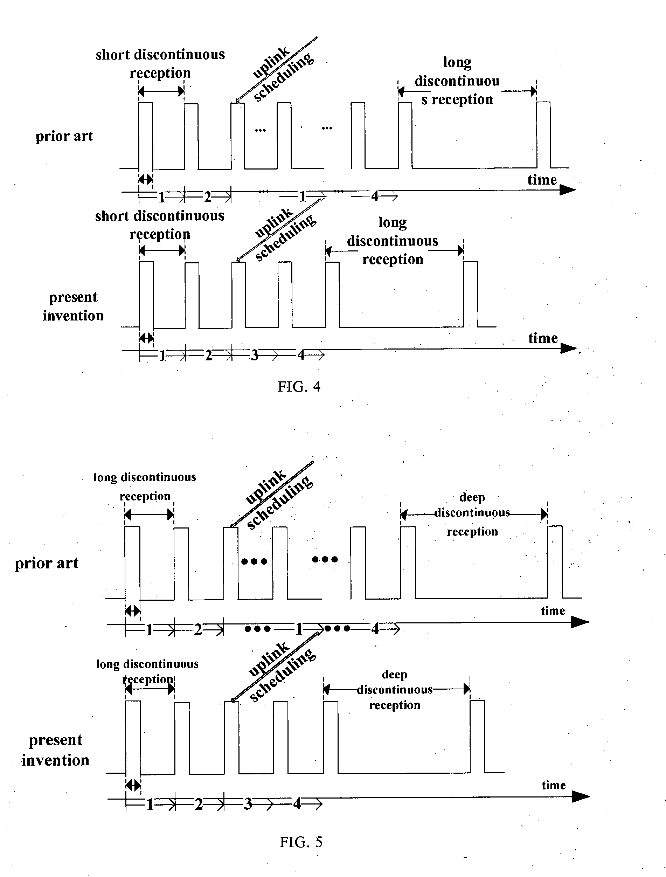

For example, it is assumed that the UE enters the Long DRX state if there is no data transmission after the specified number of Short DRX cycles, and the UE enters the Deep DRX state if there is no data transmission after the specified number of Long DRX cycle. If the UE is executing the Short DRX, a drx Short Cycle Timer, which is a the counter used to record the condition (executed numbers of the Short DRX cycle) for entering the Long DRX from the Short DRX by the UE, continues to execute count, rather than be reset and re-started. For example, the specified condition for entering the Long DRX from the Short DRX is executing 4 Short DRX cycles continually, that is, the UE has no data transmission in 4 Short DRX cycles, the counter will be incremented by one when one DRX cycle is executed by the UE. As shown in FIG. 4, in the prior art, after the UE receives the uplink scheduling from the eNB, the counting result of the counter will be reset to 0 (assuming that the plus count is adopted), if the UE hasno data transmission within 4 Short DRX cycles, the UE enters the Long DRX state. However, in this embodiment, when the UE executes the second Short DRX cycle, if an uplink scheduling from the eNB is received, and there is no data to be transmitted, the counter will continues to count, and the counting result of the counter is 2. When the counting result of the counter is 4 (0 for the case of subtraction count) and the UE always has no data transmission, the UE enters the Long DRX state. In FIG. 4, the timer in this embodiment and the timer in the prior art are the same, such as a drx-Inactivity Timer, an HARQ RTT Timer and a Retransmission timer. After the drx-Inactivity Timer expires, if the counter satisfies the condition for entering the Long DRX, the UE enters the Long DRX state. Before the drx-Inactivity Timer expires, if the counter satisfies the condition for entering the Long DRX, the UE enters the Long DRX directly after the drx-Inactivity Timer expires.

Similarly, if the UE is executing the Long DRX, the corresponding counter, i.e., the counter which records the condition (numbers of the long DRX cycle) for entering the Deep DRX from the Long DRX by the UE, continues to execute counts, rather than be cleared and re-started. The figure corresponding to this case is FIG. 5. Different from FIG. 4, if the counter satisfies the condition for entering the Deep DRX, the UE will enter the Deep DRX state.

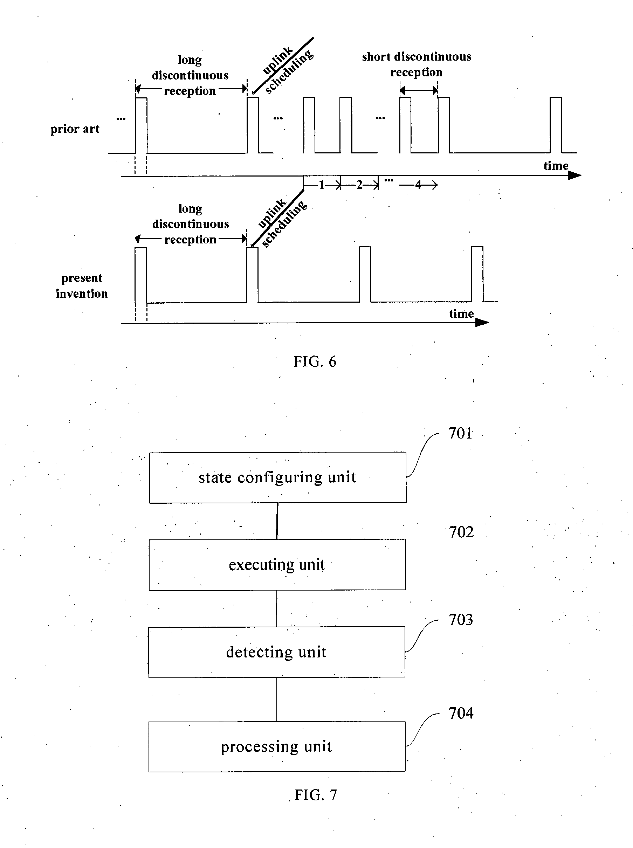

Or, if the UE is executing the Long DRX, the UE will continue to execute the Long DRX after completing the uplink data transmission without actual data, rather than entering the active state firstly, and then executing the Short DRX, and then executing the Long DRX. The specific operations after completing the uplink data transmission without actual data according to the prior art and this embodiment are shown in FIG. 6. In FIG. 6, the timer in this embodiment and the timer in the prior art are the same, such as an Inactivity Timer, an HARQ RTT Timer and a Retransmission Timer. After the Inactivity Timer expires, the UE still continues to execute the Long DRX.

In this embodiment, the measuring requirement of the UE may be reduced appropriately upon detection that the UE has no data to be transmitted or received. Or, the measuring requirement of the UE may be prolonged appropriately upon detection that the UE has no data to be transmitted or received. Or, when the UE executes the DRX, receives the uplink scheduling from the eNB, and has no data to be transmitted, the UE continues to execute count of the relevant counter, rather than re-starting the counter. In addition, even if the UE is not configured with the Deep DRX, the above operations can also be applied, so as to improve the power-saving effect of the UE.

According to the communicating method provided by this embodiment: when the user equipment in a connected state is configured with and execute a deep discontinuous reception, and is in a routine active state, and is not in a triggered active state, the user equipment detects downlink transmission notification information belonging to the user equipment within only a common search space of each transmission time interval; and performs a processing according to the downlink transmission notification information upon detection of the downlink transmission notification information belonging to the user equipment. Since the UE does not need to detect scheduling commands belonging to the UE itself within its own specific search space and, additionally, the number of times the UE detects the common search space is very limited, therefore, the method can reduce the interception behaviors significantly by limiting the search time and search space and, thus, the power-saving effect of the user equipment is improved.

Furthermore, the UE acquires notification information for entering the deep discontinuous reception state transmitted by the base station when determining that the UE has no data needed to be transmitted after leaving the deep discontinuous reception state, and enters the deep discontinuous reception state directly according to the notification information for entering the deep discontinuous reception state. Therefore, it is not necessary to perform the short discontinuous reception and long discontinuous reception, thus the time of the user equipment in the active state is shortened, and the power-saving effect can be further improved.

Furthermore, entering the deep discontinuous reception state, when the absolute value of the acquired channel condition measurement results satisfies a certain condition and/or the change amount among the acquired channel condition measurement results is less than a set threshold value , can improve the power-saving effect of the UE as well as ensure the signal quality.

Furthermore, prolonging the cycle of measuring the present cell or the adjacent cells when determining that the absolute value of the acquired channel condition measurement results within a specified number of measuring cycles satisfies a certain condition and/or the change amount among the acquired channel condition measurement results is less than a set threshold value,; or, prolonging the cycle of periodical Tracking Area Update when a condition is satisfied, can reduce the measuring times and/or the periodical Tracking Area Update times and thus can further improve the power-saving effect of the UE.

In addition, when the user equipment is in a short discontinuous reception state or a long discontinuous reception state and has received the uplink scheduling transmitted by the base station, a counter for counting the number of cycles from the short discontinuous reception cycle to the long discontinuous reception cycle, or from the long discontinuous reception cycle to the deep discontinuous reception cycle continues to count, therefore, the time for entering the long discontinuous reception state or the deep discontinuous reception state by the user equipment is shortened, thus the time of the user equipment in the active state is reduced, and the power-saving effect of the UE is further improved.

Corresponding to the above method, embodiments of the present invention also provide a communicating method, including:
configuring, by a base station, a deep discontinuous reception for a user equipment in a connected state; transmitting, by the base station, downlink transmission notification information of the user equipment within only a common search space between the common search space and a specific search space of one or more transmission time intervals when the user equipment is in a routine active state of the deep discontinuous reception state, and is not in a triggered active state, so as to notify the user equipment to perform a processing according to the transmission notification information.

For example, the eNB may configure the Deep DRX for the UE in the connected state through an RRC reconfiguration message or a system broadcast message. When the eNB has configured the Deep DRX for the UE in the connected state and the UE has entered the Deep DRX state, the UE, which is in the routine active state and is not in the triggered active state, receives the downlink transmission notification information transmitted by the eNB within only the common search space between a specific search space and the common search space of each transmission time interval.

The base station also can configure other discontinuous receptions for the user equipment in the connected state, such as a Short DRX, a Long DRX and so on.

The base station can transmit the downlink transmission notification information belonging to the user equipment through at least the following manners, so as to notify the user equipment to perform the processing:
a. The eNB transmits a PDCCH command scrambled with a C-RNTI of the UE within the CSS of one or more TTIs, so as to notify UE to receive the downlink data.
b. The eNB transmits a paging message carrying an ID (such as a C-RNTI, an S-TMSI) of the UE and a downlink data receiving indication identifier within the CSS of one or more TTIs, so as to notify UE to receive the downlink data in the subsequent TTIs.
c. The eNB transmits a paging message carrying an ID (such as a C-RNTI, an S-TMSI) of the UE and downlink data resource allocation information within the CSS of one or more TTIs, so as to notify UE to receive the downlink data according to the downlink data resource allocation information.
d. The eNB transmits a paging message carrying an ID (such as a C-RNTI, an S-TMSI) of the UE and downlink data within the CSS of one or more TTIs, so as to notify UE to receive the downlink data in the paging message.

Furthermore, the above several manners can be used alone or in combination, thus the flexibility of scheduling is increased. For example, in a combination of a and b, the eNB not only can transmit the PDCCH command scrambled with the C-RNTI of the UE in the CSS, but also can carry information for instructing the UE to receive data in the paging message; in a combination of a and c, the eNB not only can transmit the PDCCH command scrambled with the C-RNTI of the UE in the CSS, but also can carry data to be received by the UE in the paging message; in a combination of b and c, the eNB not only can carrying information for indicating the UE to receive data in the paging message, but also can carry data to be received by the UE in the paging message; in a combination of a, b and c, the eNB not only can send the PDCCH command scrambled with the C-RNTI of the UE in the CSS, but also can carry information for indicating the UE to receive data information in the paging message and can carry data to be received by the UE in the paging message; other combinations are similar to those of the above, and are not described herein. It should be noted that, although the above manners can be used in combination, the eNB usually transmits data or indication information only in one manner in a certain TTI.

In addition, when the eNB needs to schedule the downlink data of the UE and the UE is out of synchronization in the uplink, the eNB can trigger the UE to perform the processing, which may be the random access, through at least the following manners:
a. When the UE is out of synchronization in the uplink and the eNB needs to schedule the downlink data of the UE, the eNB transmits a PDCCH command scrambled with the C-RNTI of the UE within the CSS in one or more TTIs when the UE is in a routine active state and is not in a triggered active state, so as to notify UE to perform random access operations.
b. When the UE is out of synchronization in the uplink, and the eNB needs to schedule the downlink data of the UE, the eNB transmits a paging message carrying an ID (such as a C-RNTI, an S-TMSI) of the UE and a out-of-sync adjustment indication identifier within the CSS in one or more TTIs when the UE is in a routine active state and is not in a triggered active state, so as to notify UE to perform random access operations. Wherein, the out-of-sync adjustment indication identifier is used to indicate there is data needed to be received, and the UE is currently in the uplink out-of-sync state.

The above manners of triggering the UE to perform random access can be used alone or in combination, when used in combination, the eNB not only can transmit a random access indication to the UE through the PDCCH command scrambled with the C-RNTI to the UE, but also can carry the random access indication in the paging message, thus flexibility of scheduling is increased. Of course, the base station usually transmits relevant instructions only in one manner at a time, correspondingly, the UE can obtains the data or the indication information belonging to the UE itself only in one manner.

Furthermore, when satisfying a certain condition, the UE reports a message (a RRC message or a MAC CE) to the eNB to request to enter the Deep DRX state. If the eNB determines likewise that no downlink data is needed to be transmitted to the UE based on the transmitted packet or other information, the eNB can notify the UE to enter the Deep DRX state directly, such as in the manner of sending a RRC message or a MAC CE, after the UE receives the notification of entering the Deep DRX state transmitted by the eNB, the UE enters the deep DRX state directly without entering the Short DRX and Lhe long DRX. Thereby, a more power-saving mode can be entered quickly, and the power-saving effect can be improved. Optionally, the eNB can directly notify the UE to enter the Deep DRX state directly, such as in the manner of transmitting a RRC message or a MAC CE, without waiting the request for entering the Deep DRX state from UE on.

According to the base station provided by embodiments of the present: when the user equipment is in a connected state and is configured with and execute a deep discontinuous reception state, and is in a routine active state of the deep discontinuous reception, and is not in a triggered active state, the base station transmits downlink transmission notification information belonging to the user equipment within only the common search space of each transmission time interval, such that the UE only need to detect the downlink transmission notification information belonging to the user equipment within only the common search space when the user equipment is in the routine active state of the deep discontinuous reception, and is not in the triggered active state. Since the UE does not need to detect scheduling commands belonging to the UE itself within its own specific search space and, additionally, the number of times the UE detects the common search space is very limited, therefore, the method can reduce the interception behaviors significantly by limiting the search time and search space and, thus, the power-saving effect of the user equipment is improved.

Furthermore, the base station transmits notification information for entering the deep discontinuous reception state when determining that the UE has no data needed to be transmitted after the UE leaving the deep discontinuous reception state, such that the UE can enter the deep discontinuous reception state directly according to the notification information for entering the deep discontinuous reception state. Therefore, it is not necessary to perform the short discontinuous reception and the long discontinuous reception, thus the time of the user equipment in the active state is shortened, and the power-saving effect can be further improved.

Corresponding to the above method, embodiments of the present invention also provide a user terminal, as shown in FIG. 7, including:
a state configuring unit 701, configured to configure a discontinuous reception according to an instruction in a connected state, where the discontinuous reception includes a deep discontinuous reception;
an executing unit 702, configured to enter a deep discontinuous reception state according to a set parameter of the deep discontinuous reception configured by the state configuring unit 701;
a detecting unit 703, configured to detect downlink transmission notification information belonging to the user equipment within only a common search space between the common search space and a specific search space of each transmission time interval, when the executing unit 702 enters a routine active state of the deep, discontinuous reception state, and is not in a triggered active state; and
a processing unit 704, configured to perform a processing, according to the downlink transmission notification information when the downlink transmission notification information belonging to the user equipment is detected by the detecting unit.

Of course, the state configuring unit can also configures a short discontinuous reception, a long discontinuous reception and so on according to an instruction.

Further, in the case of detecting the physical downlink control channel command, the detecting unit is specifically configured to detect a physical downlink control channel command scrambled with a cell-radio network temporary identity of the user equipment within only the common search space between the common search space and the specific search space of each transmission time interval, when the executing unit enters the routine active state of the deep discontinuous reception, and is not in the triggered active state;

Correspondingly, the processing unit is specifically configured to notify the executing unit to enter the triggered active state, when the physical downlink control channel command scrambled with the cell-radio network temporary identity of the user equipment is detected by the detecting unit, and receive data according to the physical downlink control channel command;

The executing unit is further configured to enter the triggered active state according to the notification of the processing unit.

In the case of detecting the paging message, which carries the identifier of the user equipment and the downlink data receiving indication identifier, the detecting unit is specifically configured to detect a paging message carrying an identifier of the user equipment and a downlink data receiving indication identifier within only the common search space between the common search space and the specific search space of each transmission time interval, when the executing unit enters the routine active state of the deep discontinuous reception, and is not in the triggered active state;

Correspondingly, the processing unit is specifically configured to notify the executing unit to enter the triggered active state, when the paging message carrying the identifier of the user equipment and the downlink data receiving indication identifier is detected by the detecting unit, and receive downlink data according to the downlink data receiving indication identifier;

The executing unit is further configured to enter the triggered active state according to the notification of the processing unit.

In the case of detecting the paging message, which carries the identifier of the user equipment and the downlink data resource allocation information, the detecting unit is specifically configured to detect a paging message carrying an identifier of the user equipment and downlink data resource allocation information within only the common search space between the common search space and the specific search space of each transmission time interval, when the executing unit enters the routine active state of the deep discontinuous reception, and is not in the triggered active state;

Correspondingly, the processing unit is specifically configured to notify the executing unit to enter the triggered active state, when the paging message carrying the identifier of the user equipment and the downlink data resource allocation information is detected by the detecting unit, and receive the downlink data according to the downlink data resource allocation information within a specified transmission time interval;

The executing unit is further configured to enter the triggered active state according to the notification of the processing unit.

In the case of detecting the paging message, which carries the identifier of the user equipment and the downlink data, the detecting unit is specifically configured to detect a paging message carrying an identifier of the user equipment and downlink data within only the common search space between the common search space and the specific search space of each transmission time interval, when the executing unit enters the routine active state of the deep discontinuous reception, and is not in the triggered active state;

Correspondingly, the processing unit is specifically configured to notify the executing unit to enter the triggered active state, when the paging message carrying the identifier of the user equipment and the downlink data is detected by the detecting unit, and receive the downlink data carried by the paging message;

The executing unit is further configured to enter the triggered active state according to the notification of the processing unit.

Of course, as described in the above method embodiments, the above operations of detecting different messages to receive data can be combined, that is, the detecting unit can perform one or more operations of the above four operations. Correspondingly, the processing unit performs corresponding operations according to the detection result of the detecting unit.

With regard to the random access processing, in the case of detecting the physical downlink control channel command, the detecting unit is specifically configured to detect a physical downlink control channel command scrambled with a cell-radio network temporary identity of the user equipment within only the common search space between the common search space and the specific search space of each transmission time interval, when the executing unit enters the routine active state of the deep discontinuous reception, and is not in the triggered active state;

Correspondingly, the processing unit is specifically configured to perform a random access operation when the physical downlink control channel command scrambled with a cell-radio network temporary identity of the user equipment is detected by the detecting unit;

With regard to the random access processing, in the case of detecting the paging message, the detecting unit is specifically configured to detect a paging message carrying an identifier of the user equipment and a out-of-sync adjustment indication identifier within only the common search space between the common search space and the specific search space of each transmission time interval, when the executing unit enters the routine active state of the deep discontinuous reception, and is not in the triggered active state;

Correspondingly, the processing unit is specifically configured to perform a random access operation when the paging message carrying the identifier of the user equipment and a out-of-sync adjustment indication identifier is detected by the detecting unit.

Similarly, as described in the above method embodiments, the above operations of detecting different messages to perform the random access can be combined, that is, the detecting unit can perform one or more or all operations above. Correspondingly, the processing unit performs corresponding random access operations according to the detection result of the detecting unit.

The processing unit is further configured to notify the executing unit to leave the deep discontinuous reception state when the downlink transmission notification information belonging to the user equipment is detected by the detecting unit;

Correspondingly, the executing unit is further configured to leave the deep discontinuous reception state according to the indication of the processing unit, and enter a short discontinuous reception state when no data transmission within a specified time after leaving the deep discontinuous reception state; enter a long discontinuous reception state when no data is transmitted within a specified time after entering the short discontinuous reception state; entering the deep discontinuous reception state again when no data is transmitted within the specified time after entering the long discontinuous reception state.

Further, in the case that the executing unit can enter the short discontinuous reception state and the long discontinuous reception state, the user equipment further includes:
a measuring unit, configured to acquire channel condition measurement results within a specified number of measuring cycles when no data is transmitted within a specified time after the executing unit enters the long discontinuous reception state;

Correspondingly, the processing unit may also configured to instruct the executing unit to enter the deep discontinuous reception state when a change amount among the channel condition measurement results acquired by the measuring unit is less than a set threshold value; and instruct the executing unit to remain the long discontinuous reception state when the change amount among the acquired channel condition measurement results is not less than the set threshold value;

The executing unit is further configured to enter the deep discontinuous reception state, or the long discontinuous reception state according to the indication of the processing unit.

In the case that the user equipment in the triggered active state can leave the deep discontinuous reception state, the processing unit is further configured to notify the executing unit to leave the deep discontinuous reception state when the downlink transmission notification information belonging to the user equipment is detected by the detecting unit;
and is further configured to acquire notification information for entering the deep discontinuous reception state sent by a base station when determining that no data is needed to be transmitted by the user equipment after the executing unit leaves the deep discontinuous reception state, and instruct the executing unit to enter the deep discontinuous reception state according to the notification information;
or, is further configured to instruct the executing unit to enter the deep discontinuous reception state when determining that no data is needed to be transmitted by the user equipment after the executing unit leaves the deep discontinuous reception state;
correspondingly, the executing unit is further configured to leave or to enter the deep discontinuous reception state according to the indication of the processing unit.

In the case that the user equipment can enter the short discontinuous reception state, the long discontinuous reception state and the deep discontinuous reception state, the user equipment further includes:
a measuring unit, configured to acquire channel condition measurement results within a specified number of measuring cycles;

The processing unit is further configured to:
instruct the executing unit to enter the deep discontinuous reception state directly when a change amount among the channel condition measurement results acquired by the measuring unit is less than a set threshold value; instruct the executing unit to enter the short discontinuous reception state when the change amount among the channel condition measurement results acquired by the measuring unit is not less than the set threshold value, instruct the executing unit to enter a long discontinuous reception state when no data is transmitted within a specified time after the executing unit enters the short discontinuous reception state, and instruct the executing unit to enter the deep discontinuous reception state when no data is transmitted within a specified time after the executing unit enters the long discontinuous reception state;
   or
instruct the executing unit to enter the deep discontinuous reception state directly when a change amount among the channel condition measurement results acquired by the measuring unit is less than a set threshold value, and an absolute value of the channel condition measurement results is greater than the set threshold value; otherwise, instruct the executing unit to enter the short discontinuous reception state; instruct the executing unit to enter the long discontinuous reception state when no data is transmitted within a specified time after the executing unit enters the short discontinuous reception state; and instruct the executing unit to enter the deep discontinuous reception state when no data is transmitted within a specified time after the executing unit enters the long discontinuous reception state;
correspondingly, the executing unit is further configured to enter the short discontinuous reception state, or the long discontinuous reception state according to the indication of the processing unit.

In the case that the user equipment can enter the deep discontinuous reception state, and can also enter the short discontinuous reception state or the long discontinuous reception state, the executing unit is further configured to execute the short discontinuous reception and/or the long discontinuous reception;
the measuring unit is further configured to acquire a specified number of channel condition measurement results within measuring cycles when the executing unit enters the routine active state of the discontinuous reception, wherein the discontinuous reception comprises one of a short discontinuous reception state, a long discontinuous reception state and a deep discontinuous reception state; and prolonging the measuring cycle when determining that the acquired channel condition measurement results within the measuring cycles are less than a set threshold value; and shortening the measuring cycle when determining that the acquired channel condition measurement results within the measuring cycles are not less than the set threshold value.

The UE may also be configured to, when there is no data to be transmitted after the UE enters the short discontinuous reception state or the long discontinuous reception state, a corresponding counter continues to count, in this case, the UE further includes:
a receiving unit, configured to receive information sent by a base station; the information can comprise an uplink scheduling information.
Correspondingly, the executing unit is further configured to execute the short discontinuous reception and/or the long discontinuous reception;
the processing unit may specifically include:
   a processing subunit, configured to perform the processing according to the downlink transmission notification information when the downlink transmission notification information belonging to the user equipment is detected by the detecting unit;
   a counter subunit, configured to set a counter used to count the number of elapsed short discontinuous reception cycles to continue to count when determining that no data is needed to be transmitted by the user equipment, and the executing unit is in a short, discontinuous reception state and an uplink scheduling information of the base station is received by the receiving unit; and/or, set a counter used to count the number of elapsed long discontinuous reception cycles to continue to count when determining that no data is needed to be transmitted by the user equipment, and the executing unit is in a long discontinuous reception state, and an uplink scheduling information of the base station is received by the receiving unit; and
   a counter, configured to count the number of the elapsed short discontinuous reception cycles, and/or, the elapsed long discontinuous reception cycles, according to the instruction of the counter subunit.

In the case that the UE determines to enter the triggered active state after entering the deep discontinuous reception state, the UE can also remain the deep discontinuous reception state. Correspondingly,

If the downlink transmission notification information belonging to the user equipment is detected by the detecting unit, the detecting unit may also notify the executing unit to enter the triggered active state and remain the deep discontinuous reception state, besides sending the uplink data according to the downlink transmission notification information.

If the UE can be in the long discontinuous reception state, the detecting unit may also perform the similar processes, that is, notify the executing unit to enter the triggered active state and remain the long discontinuous reception state.

Correspondingly, the executing unit can enter the triggered active state and remain the long discontinuous reception state according to the instruction of the detecting unit.

The specific manner of working of the user equipment in this embodiment may be referred to the communicating method described above regarding step 201 and step 202, and will not be described herein.

According to the user equipment provided by embodiments of the present invention: when the user equipment in a connected state and is configured with and execute a deep discontinuous reception state, and is in a routine active state of the deep discontinuous reception, and is not in a triggered active state, the user equipment detects downlink transmission notification information belonging to the user equipment within only a common search space of each transmission time interval, and performs a processing according to the downlink transmission notification information upon detection of the downlink transmission notification information belonging to the user equipment. Since the UE does not need to detect scheduling commands performs a processing according to the downlink transmission notification information within its own specific search space and, additionally, the number of times the UE detects the common search space is very limited, therefore, the method can reduce the interception behaviors significantly by limiting the search time and search space and, thus, the power-saving effect of the user equipment is improved.

Furthermore, the UE acquires notification information for entering the deep discontinuous reception state transmitted by the base station when determining that the UE has no data needed to be transmitted after leaving the deep discontinuous reception state, and enters the deep discontinuous reception state directly according to the notification information for entering the deep discontinuous reception state. Therefore, it is not necessary to perform the short discontinuous reception and long discontinuous reception, thus the time of the user equipment in the active state is shortened, and the power-saving effect can be further improved.

Furthermore, entering the deep discontinuous reception state, when the change amount of the acquired channel condition measurement result is less than a set threshold value, , can improve the power-saving effect of the UE as well as ensure the signal quality.

Furthermore, prolonging the cycle of measuring the present cell or the adjacent cells when determining that the acquired channel condition measurement results within a specified number of measuring cycles is less than a set threshold value; or, prolonging the cycle of periodical Tracking Area Update when a condition is satisfied, can reduce the measuring times and/or the periodical Tracking Area Update times and thus can further improve the power-saving effect of the UE.

In addition, when the user equipment is in a short discontinuous reception state or a long discontinuous reception state and has received the uplink scheduling transmitted by the base station, a counter for counting the number of the short discontinuous reception cycle or the long discontinuous reception cycle continues to count, therefore, the time for entering the long discontinuous reception state or the deep discontinuous reception state by the user equipment is shortened, thus the time of the user equipment in the active state is reduced, and the power-saving effect of the UE is further improved.

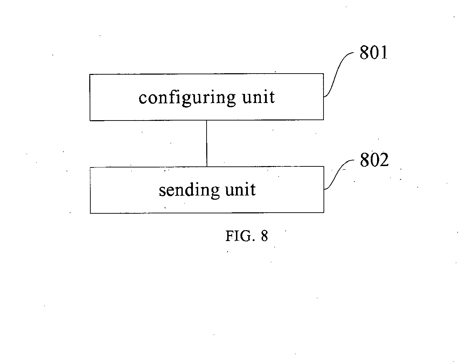

Corresponding to the user equipment, embodiments of the present invention also provide a base station, as shown in FIG. 8, including:
a configuring unit 801, configured to configure a discontinuous reception for a user equipment in a connected state, where the discontinuous reception includes a deep discontinuous reception;
a transmitting unit 802, configured to transmit downlink transmission notification information of the user equipment within only a common search space between the common search space and a specific search space of one or more transmission time intervals when the user equipment is in a routine active state of the deep discontinuous reception state, and is not in a triggered active state, so as to notify the user equipment to perform a processing according to the downlink transmission notification information.

As described above, the base station can transmit the physical downlink control channel command, the paging message, and so on. Therefore, the sending unit 802 may transmit a physical downlink control channel command scrambled with a cell-radio network temporary identity of the user equipment within only the common search space between the common search space and the specific search space of one or more transmission time intervals, when the user equipment is in the routine active state of the deep discontinuous reception state, and is not in the triggered active state;
or,
may transmit a paging message within only the common search space between the common search space and the specific search space of one or more transmission time intervals, when the user equipment is in the routine active state of the deep discontinuous reception state, and is not in the triggered active state, where the paging message carries an identifier of the user equipment and a downlink data receiving indication identifier, or carries the identifier of the user equipment and downlink data resource allocation information, or carries the identifier of the user equipment and downlink data;
or,
transmit a physical downlink control channel command scrambled with a cell-radio network temporary identity of the user equipment within only the common search space between the common search space and the specific search space of one or more transmission time intervals, when the user equipment is out-of-sync in an uplink, and the user equipment is in the routine active state of the deep discontinuous reception state, and is not in the triggered active state, so as to notify the user equipment to perform a random access according to the physical downlink control channel command;
or,
transmit a paging message within only the common search space between the common search space and the specific search space of one or more transmission time intervals, when the user equipment is out-of-sync in an uplink, and the user equipment is in the routine active state of the deep discontinuous reception state, and is not in the triggered active state, wherein the paging message carries an identifier of the user equipment and a out-of-sync adjustment indication identifier, so as to notify the user equipment to perform a random access.

As described above, the base station can transmit a message to notify the UE to enter the deep discontinuous reception state directly or enter the long discontinuous reception state directly, correspondingly, the sending unit 802 may further configured to transmit notification information for entering the deep discontinuous reception state or a long discontinuous reception state to the user equipment when determining that no data is needed to be transmitted by the user equipment after the user equipment leaves the discontinuous reception state, so as to notify the user equipment to enter the deep discontinuous reception state or the long discontinuous reception state directly,
where the discontinuous reception state, which the user equipment left, is the deep discontinuous reception state or the long discontinuous reception state.

The specific manner of working of the base station in this embodiment can be referred to the communicating method described above regarding the base station, and will not be described herein.

According to the base station provided by embodiments of the present invention provide a base station: when the user equipment is in a connected state and is configured with and execute a deep discontinuous reception state, and is in a routine active state of the deep discontinuous reception, and is not in a triggered active state, the base station transmits downlink transmission notification information belonging to the user equipment within only the common search space of each transmission time interval, such that the UE only need to detect the downlink transmission notification information belonging to the user equipment within only the common search space when the user equipment is in the routine active state of the deep discontinuous reception, and is not in the triggered active state. Since the UE does not need to detect scheduling commands belonging to the UE itself within its own specific search space and, additionally, the number of times the UE detects the common search space is very limited, therefore, the method can reduce the interception behaviors significantly by limiting the search time and search space and, thus, the power-saving effect of the user equipment is improved.

Furthermore, the base station transmits a notification information for entering the deep discontinuous reception state when determining that the UE has no data needed to be transmitted after the UE leaving the deep discontinuous reception state, such that the UE can enter the deep discontinuous reception state directly according to the notification information for entering the deep discontinuous reception state. Therefore, it is not necessary to perform the short discontinuous reception and the long, discontinuous reception, thus the time of the user equipment in the active state is shortened, and the power-saving effect can be further improved.

Persons skilled in the art can understand that all or part of the procedures in the methods according to the embodiments described above may be implemented by a computer program instructing relevant hardware. The program may be stored in a computer readable storage medium. When the program is running, the procedures of the method according to the embodiments described above are performed. The storage medium may be a magnetic disk, an optical disk, a read-only memory (Read-Only Memory, ROM) or a random access memory (Random Access Memory, RAM) or the like.

The above descriptions are merely exemplary embodiments of the present invention, but the protection scope of the present invention is not limited thereto. Any modification or replacement that can be easily thought of by persons skilled in the art without departing from the technical scope of the present invention shall fall within the protection scope of the present invention. Therefore, the protection scope of the present invention is subject to the protection scope of the claims.

## Claims

1. A processing method, wherein a user equipment in a connected state is configured with a discontinuous reception, and the discontinuous reception includes a deep discontinuous reception, and the method comprises:
when the user equipment is in a routine active state of the deep discontinuous reception state, and is not in a triggered active state, detecting, by the user equipment, downlink transmission notification information belonging to the user equipment within only a common search space between the common search space and a specific search space of each transmission time interval; and
performing, by the user equipment, a processing according to the downlink transmission notification information upon detection of the downlink transmission notification information belonging to the user equipment.

2. The method according to claim 1, wherein:
the detecting the downlink transmission notification information belonging to the user equipment, comprises:
detecting a physical downlink control channel command scrambled with a cell-radio network temporary identity of the user equipment;
the performing, by the user equipment, the processing according to the downlink transmission notification information, comprises:
entering, by the user equipment, the triggered active state according to the physical downlink control channel command, and receiving data;
or,
the detecting the downlink transmission notification information belonging to the user equipment, comprises:
detecting a paging message carrying an identifier of the user equipment and a downlink data receiving indication identifier;
the performing, by the user equipment, the processing according to the downlink transmission notification information, comprises:
entering, by the user equipment, the triggered active state according to the downlink data receiving indication identifier, and receiving downlink data;
or,
the detecting the downlink transmission notification information belonging to the user equipment, comprises:
detecting a paging message carrying an identifier of the user equipment and downlink data resource allocation information;
the performing, by the user equipment, the processing according to the downlink transmission notification information, comprises:
entering, by the user equipment, the triggered active state according to the downlink data resource allocation information, and receiving downlink data within a specified transmission time interval;
or,
the detecting the downlink transmission notification information belonging to the user equipment, comprises:
detecting a paging message carrying an identifier of the user equipment and downlink data;
the performing, by the user equipment, the processing according to the downlink transmission notification information, comprises:
entering, by the user equipment, the triggered active state according to the downlink data carried by the paging message, and receiving the downlink data.

3. The method according to claim 1, wherein:
the detecting the downlink transmission notification information belonging to the user equipment, comprises:
detecting a physical downlink control channel command scrambled with a cell-radio network temporary identity of the user equipment;
the performing the processing according to the downlink transmission notification information, comprises:
performing a random access operation, according to a random access command carried by the physical downlink control channel command;
or,
the detecting the downlink transmission notification information belonging to the user equipment, comprises:
detecting a paging message carrying an identifier of the user equipment and a out-of-sync adjustment indication identifier, wherein the step-out adjustment indication identifier is used when there is downlink data to be received and the UE is in an uplink out-of-sync state;
the performing, by the user equipment, the processing according to the downlink transmission notification information, comprises:
performing, by the user equipment, a random access operation according to the out-of-sync adjustment indication identifier carried by the paging message.

4. The method according to claim 1, further comprising:
leaving, by the user equipment, the deep discontinuous reception state upon detection of the downlink transmission notification information belonging to the user equipment,
entering, by the user equipment, a short discontinuous reception state when the user equipment determines that no data is transmitted within a specified time;
entering a long discontinuous reception state when no data is transmitted within a specified time after entering the short discontinuous reception state;
entering the deep discontinuous reception state again when no data is transmitted within a specified time after entering the long discontinuous reception state.

5. The method according to claim 4, wherein, the entering the deep discontinuous reception state if no data is transmitted within the specified time after entering the long discontinuous reception state, comprises:
acquiring channel condition measurement results within a specified number of measuring cycles when no data is transmitted within a specified time after entering the long discontinuous reception state;
entering the deep discontinuous reception state when a change amount among the acquired channel condition measurement results is less than a set threshold value;
remaining the long discontinuous reception state when the change amount among the acquired channel condition measurement results is not less than the set threshold value.

6. The method according to claim 1, further comprising:
leaving, by the user equipment, the deep discontinuous reception state upon detection of the downlink transmission notification information belonging to the user equipment;
acquiring notification information for entering the deep discontinuous reception state transmitted by a base station when determining that no data is needed to be transmitted by the user equipment;
entering the deep discontinuous reception state according to the notification information for entering the deep discontinuous reception state;
or,
leaving, by the user equipment, the deep discontinuous reception state upon detection of the downlink transmission notification information belonging to the user equipment;
entering, by the user equipment, the deep discontinuous reception state when determining that no data is needed to be transmitted by the user equipment.

7. The method according to claim 6, wherein the entering, by the user equipment, the deep discontinuous reception state comprises:
acquiring channel condition measurement results within a specified number of measuring cycles;
entering the deep discontinuous reception state directly when a change amount among the acquired channel condition measurement results is less than a set threshold value;
entering a short discontinuous reception state when the change amount among the acquired channel condition measurement results is not less than the set threshold value; entering a long discontinuous reception state when no data is transmitted within a specified time after entering the short discontinuous reception state; entering the deep discontinuous reception state when no data is transmitted within a specified time after entering the long discontinuous reception state;
or comprises:
acquiring channel condition measurement results within a specified number of measuring cycles;
entering the deep discontinuous reception state directly when a change amount among the acquired channel condition measurement results is less than a set threshold value and an absolute value of the channel condition measurement results is greater than a set threshold value;
otherwise, entering a short discontinuous reception state; entering a long discontinuous reception state when no data is transmitted within a specified time after entering the short discontinuous reception state; entering the deep discontinuous reception state when no data is transmitted within a specified time after entering the long discontinuous reception state.

8. The method according to claim 1, further comprising:
acquiring, by the user equipment, channel condition measurement results within a specified number of measuring cycles in a routine active state of the discontinuous reception state, wherein the discontinuous reception state further comprises a short discontinuous reception state and/or a long discontinuous reception state;
prolonging the measuring cycle when determining that the acquired channel condition measurement results are less than a set threshold value; and
shortening the measuring cycle when determining that the acquired channel condition measurement results are not less than the set threshold value.

9. The method according to claim 1, wherein
the configured discontinuous reception state further comprises a short discontinuous reception state and/or a long discontinuous reception state;
the method further comprises:
receiving an uplink scheduling information of a base station when the user equipment is in the short discontinuous reception state, and setting a counter used to count the number of elapsed short discontinuous reception cycles to continue to count when determining that no data is needed to be transmitted by the user equipment;
and/or, receiving an uplink scheduling information of the base station when the user equipment is in a long discontinuous reception state, setting a counter used to count the number of elapsed long discontinuous reception cycles to continue to count when determining that no data is needed to be transmitted by the user equipment.

10. The method according to claim 1, wherein:
the performing, by the user equipment, a processing according to the downlink transmission notification information upon detection of the downlink transmission notification information belonging to the user equipment, the performing the processing, by the user equipment, comprises:
upon detection of the downlink transmission notification information belonging to the user equipment, entering, by the user equipment, the triggered active state, transmitting uplink data according to the downlink transmission notification information, and remaining the deep discontinuous reception state.

11. The method according to claim 1, further comprising:
entering, by the user equipment, a long discontinuous reception state;
upon detection of the downlink transmission notification information belonging to the user equipment, entering, by the user equipment, the triggered active state, transmitting uplink data according to the downlink transmission notification information, and remaining the long discontinuous reception state.

12. The method according to any one of claims 1 to 11, wherein:
the deep discontinuous reception state is a state in which the user equipment detects the downlink transmission notification information according to the a specified cycle;
the routine active state is a normal active state entered by the user equipment according to a cycle of the deep discontinuous reception; and
the triggered active state is an active state entered by the user equipment in the routine active state when determining that there is data need to be transceived.

13. A communicating method, comprising:
configuring, by a base station, a discontinuous reception for a user equipment in a connected state, wherein the discontinuous reception includes a deep discontinuous reception;
transmitting, by the base station, downlink transmission notification information of the user equipment within only a common search space between the common search space and a specific search space of one or more transmission time intervals when the user equipment is in a routine active state of the deep discontinuous reception state, and is not in a triggered active state, so as to notify the user equipment to perform a processing according to the downlink transmission notification information.

14. The method according to claim 13, wherein the transmitting, by the base station, the downlink transmission notification information of the user equipment comprises one of the following:
transmitting, by the base station, a physical downlink control channel command scrambled with a cell-radio network temporary identity of the user equipment;
transmitting, by the base station, a paging message carrying an identifier of the user equipment and a downlink data receiving indication identifier, or carrying an identifier of the user equipment and downlink data resource allocation information, or carrying an identifier of the user equipment and downlink data;
transmitting, by the base station, a physical downlink control channel command scrambled with a cell-radio network temporary identity of the user equipment when the user equipment is out-of-sync in an uplink, so as to notify the user equipment to perform a random access according to the physical downlink control channel command;
transmitting, by the base station, a paging message carrying an identifier of the user equipment and a out-of-sync adjustment indication identifier, so as to notify the user equipment to perform a random access.

15. The method according to claim 13, further comprising: transmitting notification information for entering the deep discontinuous reception state or a long discontinuous reception state to the user equipment when determining that no data is needed to be transmitted by the user equipment after the user equipment leaves the discontinuous reception state, so as to notify the user equipment to enter the deep discontinuous reception state or the long discontinuous reception state directly,
wherein, the discontinuous reception state, which the user equipment left, is the deep discontinuous reception state or the long discontinuous reception state.

16. A user equipment, comprising:
a state configuring unit, configured to configure a discontinuous reception according to an instruction in a connected state, wherein the discontinuous reception comprises a deep discontinuous reception;
an executing unit, configured to enter a deep discontinuous reception state according to a set parameter of the deep discontinuous reception configured by the state configuring unit;
a detecting unit, configured to detect downlink transmission notification information belonging to the user equipment within only a common search space between the common search space and a specific search space of each transmission time interval, when the executing unit enters a routine active state of the deep discontinuous reception state, and is not in a triggered active state; and
a processing unit, configured to perform a processing according to the downlink transmission notification information when the downlink transmission notification information belonging to the user equipment is detected by the detecting unit.

17. The user equipment according to claim 16, wherein:
the detecting unit is specifically configured to detect a physical downlink control channel command scrambled with a cell-radio network temporary identity of the user equipment within only the common search space between the common search space and the specific search space of each transmission time interval, when the executing unit enters the routine active state of the deep discontinuous reception, and is not in the triggered active state;
the processing unit is specifically configured to notify the executing unit to enter the triggered active state, when the physical downlink control channel command scrambled with the cell-radio network temporary identity of the user equipment is detected by the detecting unit, and receive data according to the physical downlink control channel command;
the executing unit is further configured to enter the triggered active state according to the notification of the processing unit;
or,
the detecting unit is specifically configured to detect a paging message carrying an identifier of the user equipment and a downlink data receiving indication identifier within only the common search space between the common search space and the specific search space of each transmission time interval, when the executing unit enters the routine active state of the deep discontinuous reception, and is not in the triggered active state;
the processing unit is specifically configured to notify the executing unit to enter the triggered active state, when the paging message carrying the identifier of the user equipment and the downlink data receiving indication identifier is detected by the detecting unit, and receive downlink data according to the downlink data receiving indication identifier;
the executing unit is further configured to enter the triggered active state according to the notification of the processing unit;
or,
the detecting unit is specifically configured to detect a paging message carrying an identifier of the user equipment and downlink data resource allocation information within only the common search space between the common search space and the specific search space of each transmission time interval, when the executing unit enters the routine active state of the deep discontinuous reception, and is not in the triggered active state;
the processing unit is specifically configured to notify the executing unit to enter the triggered active state, when the paging message carrying the identifier of the user equipment and the downlink data resource allocation information is detected by the detecting unit, and receive the downlink data according to the downlink data resource allocation information within a specified transmission time interval;
the executing unit is further configured to enter the triggered active state according to the notification of the processing unit;
or,
the detecting unit is specifically configured to detect a paging message carrying an identifier of the user equipment and downlink data within only the common search space between the common search space and the specific search space of each transmission time interval, when the executing unit enters the routine active state of the deep discontinuous reception, and is not in the triggered active state;
the processing unit is specifically configured to notify the executing unit to enter the triggered active state, when the paging message carrying the identifier of the user equipment and the downlink data is detected by the detecting unit, and receive the downlink data carried by the paging message;
the executing unit is further configured to enter the triggered active state according to the notification of the processing unit;
or,
the detecting unit is specifically configured to detect a physical downlink control channel command scrambled with a cell-radio network temporary identity of the user equipment within only the common search space between the common search space and the specific search space of each transmission time interval, when the executing unit enters the routine active state of the deep discontinuous reception, and is not in the triggered active state;
the processing unit is specifically configured to perform a random access operation when the physical downlink control channel command scrambled with a cell-radio network temporary identity of the user equipment is detected by the detecting unit;
or,
the detecting unit is specifically configured to detect a paging message carrying an identifier of the user equipment and a out-of-sync adjustment indication identifier within only the common search space between the common search space and the specific search space of each transmission time interval, when the executing unit enters the routine active state of the deep discontinuous reception, and is not in the triggered active state;
the processing unit is specifically configured to perform a random access operation when the paging message carrying the identifier of the user equipment and a out-of-sync adjustment indication identifier is detected by the detecting unit.

18. The user equipment according to claim 16, wherein:
the processing unit is further configured to notify the executing unit to leave the deep discontinuous reception state when the downlink transmission notification information belonging to the user equipment is detected by the detecting unit;
the executing unit is further configured to leave the deep discontinuous reception state according to the indication of the processing unit, and enter a short discontinuous reception state when no data is transmitted within a specified time after leaving the deep discontinuous reception state; enter a long discontinuous reception state when no data is transmitted within a specified time after entering the short discontinuous reception state; entering the deep discontinuous reception state again when no data is transmitted within the specified time after entering the long discontinuous reception state.

19. The user equipment according to claim 18, further comprising: a measuring unit, configured to acquire channel condition measurement results within a specified number of measuring cycles when no data is transmitted within a specified time after the executing unit enters the long discontinuous reception state;
the processing unit is further configured to instruct the executing unit to enter the ddep discontinuous reception state when a change amount among the channel condition measurement results acquired by the measuring unit is less than a set threshold value; and instruct the executing unit to remain the long discontinuous reception state when the change amount among the acquired channel condition measurement results is not less than the set threshold value;
the executing unit is further configured to enter the deep discontinuous reception state or the long discontinuous reception state according to the indication of the processing unit.

20. The user equipment according to claim 16, wherein:
the processing unit is further configured to notify the executing unit to leave the deep discontinuous reception state when the downlink transmission notification information belonging to the user equipment is detected by the detecting unit;
and is further configured to acquire notification information for entering the deep discontinuous reception state sent by a base station when determining that no data is needed to be transmitted by the user equipment after the executing unit leaves the deep discontinuous reception state, and instruct the executing unit to enter the deep discontinuous reception state according to the notification information;
or, is further configured to instruct the executing unit to enter the deep discontinuous reception state when determining that no data is needed to be transmitted by the user equipment after the executing unit leaves the deep discontinuous reception state;
the executing unit is further configured to leave or to enter the deep discontinuous reception state according to the indication of the processing unit.

21. The user equipment according to claim 20, further comprising:
a measuring unit, configured to acquire channel condition measurement results within a specified number of measuring cycles;
the processing unit is further configured to
instruct the executing unit to enter the deep discontinuous reception state directly when a change amount among the channel condition measurement results acquired by the measuring unit is less than a set threshold value; instruct the executing unit to enter the short discontinuous reception state when the change amount among the channel condition measurement results acquired by the measuring unit is not less than the set threshold value, instruct the executing unit to enter a long discontinuous reception state when no data is transmitted within a specified time after the executing unit enters the short discontinuous reception state, and instruct the executing unit to enter the deep discontinuous reception state when no data is transmitted within a specified time after the executing unit enters the long discontinuous reception state;
or,
instruct the executing unit to enter the deep discontinuous reception state directly when a change amount among the channel condition measurement results acquired by the measuring unit is less than a set threshold value, and an absolute value of the channel condition measurement results is greater than the set threshold value; otherwise, instruct the executing unit to enter the short discontinuous reception state; instruct the executing unit to enter the long discontinuous reception state when no data is transmitted within a specified time after the executing unit enters the short discontinuous reception state; and instruct the executing unit to enter the deep discontinuous reception state when no data is transmitted within a specified time after the executing unit enters the long discontinuous reception state;
the executing unit is further configured to enter the short discontinuous reception state or the long discontinuous reception state according to the indication of the processing unit.

22. The user equipment according to claim 16, wherein:
the executing unit is further configured to execute a short discontinuous reception and/or a long discontinuous reception;
the measuring unit is further configured to acquire a specified number of channel condition measurement results within measuring cycles when the executing unit enters the routine active state of the discontinuous reception, wherein the discontinuous reception comprises one of a short discontinuous reception state, a long discontinuous reception state and a deep discontinuous reception state; and prolonging the measuring cycle when determining that the acquired channel condition measurement results within the measuring cycles are less than a set threshold value; and shortening the measuring cycle when determining that the acquired channel condition measurement results within the measuring cycles are not less than the set threshold value.

23. The user equipment according to claim 16, further comprising:
a receiving unit, configured to receive information sent by a base station;
the executing unit is further configured to execute a short discontinuous reception and/or a long discontinuous reception;
the processing unit comprises:
a processing subunit, configured to perform the processing according to the downlink transmission notification information when the downlink transmission notification information belonging to the user equipment is detected by the detecting unit;
a counter subunit, configured to set a counter used to count the number of elapsed short discontinuous reception cycles to continue to count when determining that no data is needed to be transmitted by the user equipment, and the executing unit is in a short discontinuous reception state and an uplink scheduling information of the base station is received by the receiving unit; and/or, set a counter used to count the number of elapsed long discontinuous reception cycles to continue to count when determining that no data is needed to be transmitted by the user equipment, and the executing unit is in a long discontinuous reception state, and an uplink scheduling information of the base station is received by the receiving unit; and
a counter, configured to count the number of the elapsed short discontinuous reception cycles, and/or, the elapsed long discontinuous reception cycles, according to the instruction of the counter subunit.

24. A base station, comprising:
a configuring unit, configured to configure a discontinuous reception for a user equipment in a connected state, wherein the discontinuous reception includes a deep discontinuous reception;
a transmitting unit, configured to transmit downlink transmission notification information of the user equipment within only a common search space between the common search space and a specific search space of one or more transmission time intervals when the user equipment is in a routine active state of the deep discontinuous reception state, and is not in a triggered active state, so as to notify the user equipment to perform a processing according to the downlink transmission notification information.

25. The base station according to claim 24, wherein:
the transmitting unit is specifically configured to,
transmit a physical downlink control channel command scrambled with a cell-radio network temporary identity of the user equipment within only the common search space between the common search space and the specific search space of one or more transmission time intervals, when the user equipment is in the routine active state of the deep discontinuous reception state, and is not in the triggered active state;
or,
transmit a paging message within only the common search space between the common search space and the specific search space of one or more transmission time intervals, when the user equipment is in the routine active state of the deep discontinuous reception state, and is not in the triggered active state, wherein the paging message carries an identifier of the user equipment and a downlink data receiving indication identifier, or carries an identifier of the user equipment and downlink data resource allocation information, or carries an identifier of the user equipment and downlink data;
or,
transmit a physical downlink control channel command scrambled with a cell-radio network temporary identity of the user equipment within only the common search space between the common search space and the specific search space of one or more transmission time intervals, when the user equipment is out-of-sync in an uplink, and the user equipment is in the routine active state of the deep discontinuous reception state, and is not in the triggered active state, so as to notify the user equipment to perform a random access according to the physical downlink control channel command;
or,
transmit a paging message within only the common search space between the common search space and the specific search space of one or more transmission time intervals, when the user equipment is out-of-sync in an uplink, and the user equipment is in the routine active state of the deep discontinuous reception state, and is not in the triggered active state, wherein the paging message carries an identifier of the user equipment and a out-of-sync adjustment indication identifier, so as to notify the user equipment to perform a random access.

26. The base station according to claim 24, wherein:
the transmitting unit is further configured to transmit notification information for entering the deep discontinuous reception state or a long discontinuous reception state to the user equipment when determining that no data is needed to be transmitted by the user equipment after the user equipment leaves the discontinuous reception state, so as to notify the user equipment to enter the deep discontinuous reception state or the long discontinuous reception state directly,
wherein, the discontinuous reception state, which the user equipment left, is the deep discontinuous reception state or the long discontinuous reception state.

## Patentansprüche

1. Verarbeitungsverfahren, wobei ein Benutzergerät in einem verbundenen Zustand mit einem diskontinuierlichen Empfang konfiguriert ist, und der diskontinuierliche Empfang einen tiefen diskontinuierlichen Empfang aufweist, und das Verfahren umfasst:
wenn das Benutzergerät in einem routinemäßigen aktiven Zustand des tiefen diskontinuierlichen Empfangszustandes ist, und nicht in einem getriggerten aktiven Zustand ist, Erkennen durch das Benutzergerät einer Benachrichtigungsinformation einer Abwärtsübertragung, die zu dem Benutzergerät gehört innerhalb nur eines gemeinsamen Suchraums zwischen dem gemeinsamen Suchraum und einem spezifischen Suchraum von jedem Übertragungszeitintervall; und
Ausführen einer Verarbeitung gemäß der Benachrichtigungsinformation der Abwärtsübertragung durch das Benutzergerät, sobald die Benachrichtigungsinformation der Abwärtsübertragung erkannt wurde, die zu dem Benutzergerät gehört.

2. Verfahren nach Anspruch 1, wobei:
das Erkennen der Benachrichtigungsinformation der Abwärtsübertragung, die zu dem Benutzergerät gehört, umfasst:
Erkennen eines Befehls für einen physischen Abwärtsübertragungssteuerkanal, der mit einer vorübergehenden Identität eines Mobilfunk/Funknetzes des Benutzergerätes verschlüsselt wurde;
das Ausführen der Verarbeitung durch das Benutzergerät gemäß der Benachrichtigungsinformation der Abwärtsübertragung umfasst:
Eintreten in den getriggerten aktiven Zustand durch das Benutzergerät gemäß dem Befehl für den physischen Abwärtsübertragungssteuerkanal und Empfangen von Daten;
oder
das Erkennen der Benachrichtigungsinformation der Abwärtsübertragung, die zu dem Benutzergerät gehört, umfasst:
Erkennen einer Funkrufnachricht die eine Kennung des Benutzergerätes und eine Kennung einer Empfangsanzeige für Abwärtsübertragungsdaten mitführt;
das Ausführen der Verarbeitung durch das Benutzergerät gemäß der Benachrichtigungsinformation der Abwärtsübertragung umfasst:
Eintreten in den getriggerten aktiven Zustand durch das Benutzergerät gemäß der Kennung einer Empfangsanzeige für Abwärtsübertragungsdaten und Empfangen von Abwärtsübertragungsdaten;
oder
das Erkennen der Benachrichtigungsinformation der Abwärtsübertragung, die zu dem Benutzergerät gehört, umfasst:
Erkennen einer Funkrufnachricht die eine Kennung des Benutzergerätes und eine Information zur Ressourcenzuordnung für Abwärtsübertragungsdaten mitführt;
das Ausführen der Verarbeitung durch das Benutzergerät gemäß der Benachrichtigungsinformation der Abwärtsübertragung umfasst:
Eintreten in den getriggerten aktiven Zustand durch das Benutzergerät gemäß der Information zur Ressourcenzuordnung für Abwärtsübertragungsdaten und
Empfangen von Abwärtsübertragungsdaten innerhalb eines festgelegten Übertragungszeitintervalls;
oder
das Erkennen der Benachrichtigungsinformation der Abwärtsübertragung, die zu dem Benutzergerät gehört, umfasst:
Erkennen einer Funkrufnachricht, die eine Kennung des Benutzergerätes und Abwärtsübertragungsdaten mitführt; das Ausführen der Verarbeitung durch das Benutzergerät gemäß der Benachrichtigungsinformation der Abwärtsübertragung umfasst:
Eintreten in den getriggerten aktiven Zustand durch das Benutzergerät gemäß den Abwärtsübertragungsdaten, die von der Funkrufnachricht mitgeführt werden, und Empfangen der Abwärtsübertragungsdaten.

3. Verfahren nach Anspruch 1, wobei:
das Erkennen der Benachrichtigungsinformation der Abwärtsübertragung, die zu dem Benutzergerät gehört, umfasst:
Erkennen eines Befehls für einen physischen Abwärtsübertragungssteuerkanal, der mit einer vorübergehenden Identität eines Mobilfunk/Funknetzes des Benutzergerätes verschlüsselt wurde;
das Ausführen der Verarbeitung gemäß der Benachrichtigungsinformation der Abwärtsübertragung, umfasst:
Ausführen einer Direktzugriffsoperation gemäß einem Direktzugriffsbefehl, der in dem Befehl für den physischen Abwärtsübertragungssteuerkanal mitgeführt wird;
oder
das Erkennen der Benachrichtigungsinformation der Abwärtsübertragung, die zu dem Benutzergerät gehört, umfasst:
Erkennen einer Funkrufnachricht die eine Kennung des Benutzergerätes und eine Kennung einer Anpassungsanzeige für eine fehlende Synchronisation mitführt, wobei die Kennung einer Anpassungsanzeige für eine Erweiterung verwendet wird, wenn Abwärtsübertragungsdaten empfangen werden und das Benutzergerät sich in einem nicht synchronisierten Zustand einer Aufwärtsübertragung befindet;
das Ausführen der Verarbeitung durch das Benutzergerät gemäß der Benachrichtigungsinformation der Abwärtsübertragung umfasst:
Ausführen einer Direktzugriffsoperation durch das Benutzergerät gemäß der Kennung einer Anpassungsanzeige für eine fehlende Synchronisation, die von der Funkrufnachricht mitgeführt wird.

4. Verfahren nach Anspruch 1, das außerdem umfasst:
Verlassen des tiefen diskontinuierlichen Empfangszustandes durch das Benutzergerät, sobald die Benachrichtigungsinformation der Abwärtsübertragung erkannt wurde, die zu dem Benutzergerät gehört;
Eintreten in einen kurzen diskontinuierlichen Empfangszustand durch das Benutzergerät, sobald das Benutzergerät ermittelt, dass innerhalb eines festgelegten Zeitraums keine Daten übertragen werden;
Eintreten in einen langen diskontinuierlichen Empfangszustand, wenn innerhalb eines festgelegten Zeitraums nach dem Eintreten in den kurzen diskontinuierlichen Empfangszustand keine Daten übertragen werden;
erneutes Eintreten in den tiefen diskontinuierlichen Empfangszustand, wenn innerhalb eines festgelegten Zeitraums nach dem Eintreten in den langen diskontinuierlichen Empfangszustand keine Daten übertragen werden.

5. Verfahren nach Anspruch 4, wobei das Eintreten in den tiefen diskontinuierlichen Empfangszustand, wenn innerhalb eines festgelegten Zeitraums nach dem Eintreten in den langen diskontinuierlichen Empfangszustand keine Daten übertragen werden, umfasst:
Erfassen von Messergebnissen der Kanalbedingungen innerhalb einer festgelegten Anzahl von Messzyklen, wenn innerhalb eines festgelegten Zeitraums nach dem Eintreten in den langen diskontinuierlichen Empfangszustand keine Daten übertragen werden;
Eintreten in den tiefen diskontinuierlichen Empfangszustand, wenn eine Wechselmenge der erfassten Messergebnisse der Kanalbedingungen geringer ist als ein eingestellter Schwellenwert;
Beibehalten des langen diskontinuierlichen Empfangszustandes wenn die Wechselmenge der erfassten Messergebnisse der Kanalbedingungen nicht geringer ist als der eingestellte Schwellenwert.

6. Verfahren nach Anspruch 1, das außerdem umfasst:
Verlassen des tiefen diskontinuierlichen Empfangszustandes durch das Benutzergerät, sobald die Benachrichtigungsinformation der Abwärtsübertragung erkannt wurde, die zu dem Benutzergerät gehört;
Erfassen einer Benachrichtigungsinformation für das Eintreten in den tiefen diskontinuierlichen Empfangszustand, die von einer Basisstation übertragen wird,
sobald ermittelt wurde, dass es nicht notwendig ist, Daten durch das Benutzergerät zu übertragen;
Eintreten in den tiefen diskontinuierlichen Empfangszustand gemäß der Benachrichtigungsinformation für das Eintreten in den tiefen diskontinuierlichen Empfangszustand;
oder
Verlassen des tiefen diskontinuierlichen Empfangszustandes durch das Benutzergerät, sobald die Benachrichtigungsinformation der Abwärtsübertragung erkannt wurde, die zu dem Benutzergerät gehört;
Eintreten in den tiefen diskontinuierlichen Empfangszustand durch das Benutzergerät, sobald ermittelt wurde, dass es nicht notwendig ist, Daten durch das Benutzergerät zu übertragen.

7. Verfahren nach Anspruch 6, wobei das Eintreten in den tiefen diskontinuierlichen Empfangszustand durch das Benutzergerät umfasst:
Erfassen von Messergebnissen der Kanalbedingungen innerhalb einer festgelegten Anzahl von Messzyklen;
Eintreten in den tiefen diskontinuierlichen Empfangszustand, direkt wenn eine Wechselmenge der erfassten Messergebnisse der Kanalbedingungen geringer ist als ein eingestellter Schwellenwert;
Eintreten in einen kurzen diskontinuierlichen Empfangszustand, wenn die Wechselmenge der erfassten Messergebnisse der Kanalbedingungen nicht geringer ist als der eingestellte Schwellenwert;
Eintreten in einen langen diskontinuierlichen Empfangszustand, wenn innerhalb eines festgelegten Zeitraums nach dem Eintreten in den kurzen diskontinuierlichen Empfangszustand keine Daten übertragen werden;
Eintreten in den tiefen diskontinuierlichen Empfangszustand, wenn innerhalb eines festgelegten Zeitraums nach dem Eintreten in den langen diskontinuierlichen Empfangszustand keine Daten übertragen werden;
oder umfasst:
Erfassen von Messergebnissen der Kanalbedingungen innerhalb einer festgelegten Anzahl von Messzyklen;
Eintreten in den tiefen diskontinuierlichen Empfangszustand, direkt wenn eine Wechselmenge der erfassten Messergebnisse der Kanalbedingungen geringer ist als ein eingestellter Schwellenwert und ein Absolutwert der Messergebnisse der Kanalbedingungen größer ist als ein eingestellter Schwellenwert;
andernfalls Eintreten in einen kurzen diskontinuierlichen Empfangszustand;
Eintreten in einen langen diskontinuierlichen Empfangszustand, wenn innerhalb eines festgelegten Zeitraums nach dem Eintreten in den kurzen diskontinuierlichen Empfangszustand keine Daten übertragen werden;
Eintreten in den tiefen diskontinuierlichen Empfangszustand, wenn innerhalb eines festgelegten Zeitraums nach dem Eintreten in den langen diskontinuierlichen Empfangszustand keine Daten übertragen werden.

8. Verfahren nach Anspruch 1, das außerdem umfasst:
Erfassen von Messergebnissen der Kanalbedingungen durch das Benutzergerät innerhalb einer festgelegten Anzahl von Messzyklen in einem routinemäßigen aktiven Zustand des diskontinuierlichen Empfangszustandes, wobei der diskontinuierliche Empfangszustand außerdem einen kurzen diskontinuierlichen Empfangszustand und/oder einen langen diskontinuierlichen Empfangszustand umfasst;
Verlängern des Messzyklus, wenn ermittelt wird, dass die erfassten Messergebnisse der Kanalbedingungen geringer sind als ein festgelegter Schwellenwert; und
Verkürzen des Messzyklus, wenn ermittelt wird, dass die erfassten Messergebnisse der Kanalbedingungen nicht geringer sind als der eingestellte Schwellenwert.

9. Verfahren nach Anspruch 1, wobei
der konfigurierte diskontinuierliche Empfangszustand außerdem einen kurzen diskontinuierlichen Empfangszustand und/oder einen langen diskontinuierlichen Empfangszustand umfasst;
das Verfahren außerdem aufweist:
Empfangen einer Zeitplaninformation einer Aufwärtsübertragung von einer Basisstation, wenn sich das Benutzergerät in dem kurzen diskontinuierlichen Empfangszustand befindet, und Einstellen eines Zählers, der verwendet wird, die Anzahl der abgelaufenen kurzen diskontinuierlichen Empfangszyklen zu zählen, zum Weiterzählen, wenn ermittelt wird, dass es nicht notwendig ist, Daten durch das Benutzergerät zu übertragen;
und/oder Empfangen einer Zeitplaninformation einer Aufwärtsübertragung von der Basisstation, wenn sich das Benutzergerät in einem langen diskontinuierlichen Empfangszustand befindet, Einstellen eines Zählers, der verwendet wird, die Anzahl der abgelaufenen langen diskontinuierlichen Empfangszyklen zu zählen, zum Weiterzählen, wenn ermittelt wird, dass es nicht notwendig ist, Daten durch das Benutzergerät zu übertragen.

10. Verfahren nach Anspruch 1, wobei:
das Ausführen einer Verarbeitung gemäß der Benachrichtigungsinformation der Abwärtsübertragung durch das Benutzergerät, sobald die Benachrichtigungsinformation der Abwärtsübertragung erkannt wurde, die zu dem Benutzergerät gehört, umfasst:
nach dem Erkennen der Benachrichtigungsinformation der Abwärtsübertragung, die zu dem Benutzergerät gehört, Eintreten in den getriggerten aktiven Zustand durch das Benutzergerät, Übertragen der Aufwärtsübertragungsdaten gemäß der Benachrichtigungsinformation der Abwärtsübertragung und Beibehalten des tiefen diskontinuierlichen Empfangszustandes.

11. Verfahren nach Anspruch 1, das außerdem umfasst:
Eintreten in einen langen diskontinuierlichen Empfangszustand durch das Benutzergerät;
nach dem Erkennen der Benachrichtigungsinformation der Abwärtsübertragung, die zu dem Benutzergerät gehört, Eintreten in den getriggerten aktiven Zustand durch das Benutzergerät, Übertragen der Aufwärtsübertragungsdaten gemäß der Benachrichtigungsinformation der Abwärtsübertragung und Beibehalten des langen diskontinuierlichen Empfangszustandes.

12. Verfahren nach einem der Ansprüche 1 bis 11, wobei:
der tiefe diskontinuierliche Empfangszustand ein Zustand ist, in dem das Benutzergerät die Benachrichtigungsinformation der Abwärtsübertragung gemäß dem festgelegten Zyklus erkennt;
der routinemäßige aktive Zustand ein normaler aktiver Zustand ist, in den das Benutzergerät gemäß einem Zyklus des tiefen diskontinuierlichen Empfangszustandes eintritt; und
der getriggerte aktive Zustand ein aktiver Zustand ist, in den das Benutzergerät in dem routinemäßigen aktiven Zustand eintritt, wenn ermittelt wird, dass es notwendig ist, Daten zu senden und zu empfangen.

13. Kommunikationsverfahren, umfassend:
Konfigurieren eines diskontinuierlichen Empfangs durch eine Basisstation für ein Benutzergerät in einem verbundenen Zustand, wobei der diskontinuierliche Empfang einen tiefen diskontinuierlichen Empfang aufweist;
Übertragen durch die Basisstation einer Benachrichtigungsinformation einer Abwärtsübertragung des Benutzergerätes innerhalb nur eines gemeinsamen Suchraums zwischen dem gemeinsamen Suchraum und einem spezifischen Suchraum von einem oder mehreren Übertragungszeitintervallen, wenn sich das Benutzergerät in einem routinemäßigen aktiven Zustand des tiefen diskontinuierlichen Empfangszustandes befindet, und sich nicht in einem getriggerten aktiven Zustand befindet, sodass das Benutzergerät benachrichtigt wird, eine Verarbeitung gemäß der Benachrichtigungsinformation der Abwärtsübertragung auszuführen.

14. Verfahren nach Anspruch 13, wobei das Übertragen durch die Basisstation einer Benachrichtigungsinformation einer Abwärtsübertragung des Benutzergerätes einen der folgenden Schritte umfasst:
Übertragen eines Befehls für einen physischen Abwärtsübertragungssteuerkanal durch die Basisstation, wobei der Befehl mit einer vorübergehenden Identität eines Mobilfunk/Funknetzes des Benutzergerätes verschlüsselt wurde;
Übertragen einer Funkrufnachricht durch die Basisstation, wobei die Funkrufnachricht eine Kennung des Benutzergerätes und eine Kennung einer Empfangsanzeige für Abwärtsübertragungsdaten oder eine Kennung des Benutzergerätes und eine Information zur Ressourcenzuordnung für Abwärtsübertragungsdaten oder eine Kennung des Benutzergerätes und Abwärtsübertragungsdaten mitführt;
Übertragen eines Befehls für einen physischen Abwärtsübertragungssteuerkanal durch die Basisstation, wobei der Befehl mit einer vorübergehenden Identität eines Mobilfunk/Funknetzes des Benutzergerätes verschlüsselt wurde, wenn das Benutzergerät in einer Aufwärtsübertragung nicht synchronisiert ist, sodass das Benutzergerät benachrichtigt wird, einen Direktzugriff gemäß dem Befehl für den physischen Abwärtsübertragungssteuerkanal auszuführen;
Übertragen einer Funkrufnachricht durch die Basisstation, wobei die Funkrufnachricht eine Kennung des Benutzergerätes und eine Kennung einer Anpassungsanzeige für eine fehlende Synchronisation mitführt, sodass das Benutzergerät benachrichtigt wird, einen Direktzugriff auszuführen.

15. Verfahren nach Anspruch 13, das außerdem umfasst: Übertragen einer Benachrichtigungsinformation für das Eintreten in den tiefen diskontinuierlichen Empfangszustand oder einen langen diskontinuierlichen Empfangszustand an das Benutzergerät, wenn ermittelt wird, dass es nicht notwendig ist, dass Daten durch das Benutzergerät übertragen werden, nachdem das Benutzergerät den diskontinuierlichen Empfangszustand verlässt, sodass das Benutzergerät benachrichtigt wird, direkt in den tiefen diskontinuierlichen Empfangszustand oder den langen diskontinuierlichen Empfangszustand einzutreten,
wobei der diskontinuierliche Empfangszustand, der von dem Benutzergerät verlassen wurde, der tiefe diskontinuierliche Empfangszustand oder der lange diskontinuierliche Empfangszustand ist.

16. Benutzergerät, umfassend:
eine Zustandskonfiguriereinheit, die konfiguriert ist, einen diskontinuierlichen Empfang gemäß einer Anweisung in einem verbundenen Zustand zu konfigurieren, wobei der diskontinuierliche Empfang einen tiefen diskontinuierlichen Empfang umfasst;
eine Ausführungseinheit, die konfiguriert ist, in einen tiefen diskontinuierlichen Empfangszustand gemäß einem eingestellten Parameter des tiefen diskontinuierlichen Empfangs einzutreten, der von der Zustandskonfiguriereinheit konfiguriert wurde;
eine Erkennungseinheit, die konfiguriert ist, eine Benachrichtigungsinformation einer Abwärtsübertragung zu erkennen, die zu einem Benutzergerät gehört, innerhalb nur eines gemeinsamen Suchraums zwischen dem gemeinsamen Suchraum und einem spezifischen Suchraum von jedem Übertragungszeitintervall, wenn die Ausführungseinheit in einen routinemäßigen aktiven Zustand des tiefen diskontinuierlichen Empfangszustands eintritt und nicht in einem getriggerten aktiven Zustand ist; und
eine Verarbeitungseinheit, die konfiguriert ist, eine Verarbeitung gemäß der Benachrichtigungsinformation der Abwärtsübertragung auszuführen, wenn die Benachrichtigungsinformation der Abwärtsübertragung, die zu dem Benutzergerät gehört, von der Erkennungseinheit erkannt wird.

17. Benutzergerät nach Anspruch 16, wobei:
die Erkennungseinheit speziell konfiguriert ist, einen Befehl für einen physischen Abwärtsübertragungssteuerkanal, der mit einer vorübergehenden Identität eines Mobilfunk/Funknetzes des Benutzergerätes verschlüsselt wurde, innerhalb nur eines gemeinsamen Suchraums zwischen dem gemeinsamen Suchraum und dem spezifischen Suchraum von jedem Übertragungszeitintervall zu erkennen, wenn die Ausführungseinheit in den routinemäßigen aktiven Zustand des tiefen diskontinuierlichen Empfangszustands eintritt und nicht in dem getriggerten aktiven Zustand ist;
die Verarbeitungseinheit speziell konfiguriert ist, die Ausführungseinheit zu benachrichtigen, um in den getriggerten aktiven Zustand einzutreten, wenn der Befehl für den physischen Abwärtsübertragungssteuerkanal, der mit einer vorübergehenden Identität eines Mobilfunk/Funknetzes des Benutzergerätes verschlüsselt wurde, von der Erkennungseinheit erkannt wird, und Daten gemäß dem Befehl für den physischen Abwärtsübertragungssteuerkanal zu empfangen;
die Ausführungseinheit außerdem konfiguriert ist, gemäß der Benachrichtigung der Verarbeitungseinheit in den getriggerten aktiven Zustand einzutreten;
oder
die Erkennungseinheit speziell konfiguriert ist, eine Funkrufnachricht, die eine Kennung des Benutzergerätes und eine Kennung einer Empfangsanzeige für Abwärtsübertragungsdaten mitführt, innerhalb nur eines gemeinsamen Suchraums zwischen dem gemeinsamen Suchraum und dem spezifischen Suchraum von jedem Übertragungszeitintervall zu erkennen, wenn die Ausführungseinheit in den routinemäßigen aktiven Zustand des tiefen diskontinuierlichen Empfangszustands eintritt und nicht in dem getriggerten aktiven Zustand ist;
die Verarbeitungseinheit speziell konfiguriert ist, die Ausführungseinheit zu benachrichtigen, in den getriggerten aktiven Zustand einzutreten, wenn die Funkrufnachricht, welche die Kennung des Benutzergerätes und die Kennung einer Empfangsanzeige für Abwärtsübertragungsdaten mitführt, von der Erkennungseinheit erkannt wird, und Abwärtsübertragungsdaten gemäß der Kennung der Empfangsanzeige für Abwärtsübertragungsdaten zu empfangen;
die Ausführungseinheit außerdem konfiguriert ist, gemäß der Benachrichtigung der Verarbeitungseinheit in den getriggerten aktiven Zustand einzutreten;
oder
die Erkennungseinheit speziell konfiguriert ist, eine Funkrufnachricht, die eine Kennung des Benutzergerätes und eine Information zur Ressourcenzuordnung für Abwärtsübertragungsdaten mitführt, innerhalb nur eines gemeinsamen Suchraums zwischen dem gemeinsamen Suchraum und dem spezifischen Suchraum von jedem Übertragungszeitintervall zu erkennen, wenn die Ausführungseinheit in den routinemäßigen aktiven Zustand des tiefen diskontinuierlichen Empfangszustands eintritt und nicht in dem getriggerten aktiven Zustand ist;
die Verarbeitungseinheit speziell konfiguriert ist, die Ausführungseinheit zu benachrichtigen, in den getriggerten aktiven Zustand einzutreten, wenn die Funkrufnachricht, welche die Kennung des Benutzergerätes und die Information zur Ressourcenzuordnung für Abwärtsübertragungsdaten mitführt, von der Erkennungseinheit erkannt wird, und Abwärtsübertragungsdaten gemäß der Information zur Ressourcenzuordnung für Abwärtsübertragungsdaten innerhalb eines festgelegten Übertragungszeitintervalls zu empfangen;
die Ausführungseinheit außerdem konfiguriert ist, gemäß der Benachrichtigung der Verarbeitungseinheit in den getriggerten aktiven Zustand einzutreten;
oder
die Erkennungseinheit speziell konfiguriert ist, eine Funkrufnachricht, die eine Kennung des Benutzergerätes und Abwärtsübertragungsdaten mitführt, innerhalb nur eines gemeinsamen Suchraums zwischen dem gemeinsamen Suchraum und dem spezifischen Suchraum von jedem Übertragungszeitintervall zu erkennen, wenn die Ausführungseinheit in den routinemäßigen aktiven Zustand des tiefen diskontinuierlichen Empfangszustands eintritt und nicht in dem getriggerten aktiven Zustand ist;
die Verarbeitungseinheit speziell konfiguriert ist, die Ausführungseinheit zu benachrichtigen, in den getriggerten aktiven Zustand einzutreten, wenn die Funkrufnachricht, welche die Kennung des Benutzergerätes und die Abwärtsübertragungsdaten mitführt, von der Erkennungseinheit erkannt wird, und
die von der Funkrufnachricht mitgeführten Abwärtsübertragungsdaten zu empfangen;
die Ausführungseinheit außerdem konfiguriert ist, gemäß der Benachrichtigung der Verarbeitungseinheit in den getriggerten aktiven Zustand einzutreten;
oder
die Erkennungseinheit speziell konfiguriert ist, einen Befehl für einen physischen Abwärtsübertragungssteuerkanal, der mit einer vorübergehenden Identität eines Mobilfunk/Funknetzes des Benutzergerätes verschlüsselt wurde, innerhalb nur eines gemeinsamen Suchraums zwischen dem gemeinsamen Suchraum und dem spezifischen Suchraum von jedem Übertragungszeitintervall zu erkennen, wenn die Ausführungseinheit in den routinemäßigen aktiven Zustand des tiefen diskontinuierlichen Empfangszustands eintritt und nicht in dem getriggerten aktiven Zustand ist;
die Verarbeitungseinheit speziell konfiguriert ist, eine Direktzugriffsoperation auszuführen, wenn der Befehl für den physischen Abwärtsübertragungssteuerkanal,
der mit einer vorübergehenden Identität eines Mobilfunk/Funknetzes des Benutzergerätes verschlüsselt wurde, von der Erkennungseinheit erkannt wird;
oder
die Erkennungseinheit speziell konfiguriert ist, eine Funkrufnachricht, die eine Kennung des Benutzergerätes und eine Kennung einer Anpassungsanzeige für eine fehlende Synchronisation mitführt, innerhalb nur eines gemeinsamen Suchraums zwischen dem gemeinsamen Suchraum und dem spezifischen Suchraum von jedem Übertragungszeitintervall zu erkennen, wenn die Ausführungseinheit in den routinemäßigen aktiven Zustand des tiefen diskontinuierlichen Empfangszustands eintritt und nicht in dem getriggerten aktiven Zustand ist;
die Verarbeitungseinheit speziell konfiguriert ist, eine Direktzugriffsoperation auszuführen, wenn die Funkrufnachricht, welche die Kennung des Benutzergerätes und die Kennung der Anpassungsanzeige für die fehlende Synchronisation mitführt,
von der Erkennungseinheit erkannt wird.

18. Benutzergerät nach Anspruch 16, wobei:
die Verarbeitungseinheit außerdem konfiguriert ist, die Ausführungseinheit zu benachrichtigen, den tiefen diskontinuierlichen Empfangszustand zu verlassen, wenn die Benachrichtigungsinformation der Abwärtsübertragung, die zu dem Benutzergerät gehört, von der Erkennungseinheit erkannt wird;
die Ausführungseinheit außerdem konfiguriert ist, den tiefen diskontinuierlichen Empfangszustand gemäß der Anweisung der Verarbeitungseinheit zu verlassen, und in einen kurzen diskontinuierlichen Empfangszustand einzutreten, wenn innerhalb eines festgelegten Zeitraums nach dem Verlassen des tiefen diskontinuierlichen Empfangszustands keine Daten übertragen werden; in einen langen diskontinuierlichen Empfangszustand einzutreten, wenn innerhalb eines festgelegten Zeitraums nach dem Eintreten in den kurzen diskontinuierlichen Empfangszustand keine Daten übertragen werden; erneut in den tiefen diskontinuierlichen Empfangszustand einzutreten, wenn innerhalb eines festgelegten Zeitraums nach dem Eintreten in den langen diskontinuierlichen Empfangszustand keine Daten übertragen werden.

19. Benutzergerät nach Anspruch 18, das außerdem umfasst: eine Messeinheit, die konfiguriert ist, Messergebnisse der Kanalbedingungen innerhalb einer festgelegten Anzahl von Messzyklen zu erfassen, wenn innerhalb eines festgelegten Zeitraums nach dem Eintreten der Ausführungseinheit in den langen diskontinuierlichen Empfangszustand keine Daten übertragen werden;
wobei die Verarbeitungseinheit außerdem konfiguriert ist, die Ausführungseinheit anzuweisen, in den tiefen diskontinuierlichen Empfangszustand einzutreten, wenn eine Wechselmenge der Messergebnisse der Kanalbedingungen, die mit der Messeinheit erfasst werden, geringer ist als ein eingestellter Schwellenwert; und die Ausführungseinheit anzuweisen, in dem langen diskontinuierlichen Empfangszustand zu bleiben, wenn die Wechselmenge der erfassten Messergebnisse der Kanalbedingungen werden, nicht geringer ist als der eingestellte Schwellenwert; wobei die Ausführungseinheit außerdem konfiguriert ist, gemäß der Anweisung der Verarbeitungseinheit in den tiefen diskontinuierlichen Empfangszustand oder den langen diskontinuierlichen Empfangszustand einzutreten.

20. Benutzergerät nach Anspruch 16, wobei:
die Verarbeitungseinheit außerdem konfiguriert ist, die Ausführungseinheit zu benachrichtigen, den tiefen diskontinuierlichen Empfangszustand zu verlassen, wenn die Benachrichtigungsinformation der Abwärtsübertragung, die zu dem Benutzergerät gehört, von der Erkennungseinheit erkannt wird;
und außerdem konfiguriert ist, eine Benachrichtigungsinformation für das Eintreten in den tiefen diskontinuierlichen Empfangszustand zu erfassen, die von einer Basisstation gesendet wird, wenn ermittelt wird, dass es nicht notwendig ist, dass durch das Benutzergerät Daten übertragen werden, nachdem die Ausführungseinheit den tiefen diskontinuierlichen Empfangszustand verlässt, und die Ausführungseinheit anzuweisen, gemäß der Benachrichtigungsinformation in den tiefen diskontinuierlichen Empfangszustand einzutreten;
oder
außerdem konfiguriert ist, die Ausführungseinheit anzuweisen, in den tiefen diskontinuierlichen Empfangszustand einzutreten, wenn ermittelt wird, dass es nicht notwendig ist, dass durch das Benutzergerät Daten übertragen werden, nachdem die Ausführungseinheit den tiefen diskontinuierlichen Empfangszustand verlässt;
die Ausführungseinheit außerdem konfiguriert ist, gemäß der Anweisung der Verarbeitungseinheit den tiefen diskontinuierlichen Empfangszustand zu verlassen oder in diesen einzutreten.

21. Benutzergerät nach Anspruch 20, das außerdem umfasst:
eine Messeinheit, die konfiguriert ist, Messergebnisse der Kanalbedingungen innerhalb einer festgelegten Anzahl von Messzyklen zu erfassen;
wobei die Verarbeitungseinheit außerdem konfiguriert ist,
die Ausführungseinheit anzuweisen, direkt in den tiefen diskontinuierlichen Empfangszustand einzutreten, wenn eine Wechselmenge der Messergebnisse der Kanalbedingungen, die mit der Messeinheit erfasst werden, geringer ist als ein eingestellter Schwellenwert; die Ausführungseinheit anzuweisen, in den kurzen diskontinuierlichen Empfangszustand einzutreten, wenn die Wechselmenge der Messergebnisse der Kanalbedingungen, die mit der Messeinheit erfasst werden, nicht geringer ist als der eingestellte Schwellenwert; die Ausführungseinheit anzuweisen,
in einen langen diskontinuierlichen Empfangszustand einzutreten, wenn innerhalb eines festgelegten Zeitraums, nach dem die Ausführungseinheit in den kurzen diskontinuierlichen Empfangszustand eingetreten ist, keine Daten übertragen werden;
und die Ausführungseinheit anzuweisen, in den tiefen diskontinuierlichen Empfangszustand einzutreten, wenn innerhalb eines festgelegten Zeitraums, nach dem die Ausführungseinheit in den langen diskontinuierlichen Empfangszustand eingetreten ist, keine Daten übertragen werden;
oder
die Ausführungseinheit anzuweisen, direkt in den tiefen diskontinuierlichen Empfangszustand einzutreten, wenn eine Wechselmenge der Messergebnisse der Kanalbedingungen, die mit der Messeinheit erfasst werden, geringer ist als ein eingestellter Schwellenwert und ein Absolutwert der Messergebnisse der Kanalbedingungen größer ist als der eingestellte Schwellenwert; andernfalls die Ausführungseinheit anzuweisen, in den kurzen diskontinuierlichen Empfangszustand einzutreten; die Ausführungseinheit anzuweisen, in den langen diskontinuierlichen Empfangszustand einzutreten, wenn innerhalb eines festgelegten Zeitraums, nach dem die Ausführungseinheit in den kurzen diskontinuierlichen Empfangszustand eingetreten ist, keine Daten übertragen werden; und die Ausführungseinheit anzuweisen, in den tiefen diskontinuierlichen Empfangszustand einzutreten, wenn innerhalb eines festgelegten Zeitraums, nach dem die Ausführungseinheit in den langen diskontinuierlichen Empfangszustand eingetreten ist, keine Daten übertragen werden;
wobei die Ausführungseinheit außerdem konfiguriert ist, gemäß der Anweisung der Verarbeitungseinheit in den kurzen diskontinuierlichen Empfangszustand oder den langen diskontinuierlichen Empfangszustand einzutreten.

22. Benutzergerät nach Anspruch 16, wobei:
die Ausführungseinheit außerdem konfiguriert ist, einen kurzen diskontinuierlichen Empfang und/oder einen langen diskontinuierlichen Empfang auszuführen;
die Messeinheit außerdem konfiguriert ist, eine festgelegte Anzahl von Messergebnissen der Kanalbedingungen innerhalb der Messzyklen zu erfassen, wenn die Ausführungseinheit in den routinemäßigen aktiven Zustand des diskontinuierlichen Empfangs eintritt, wobei der diskontinuierliche Empfang einen aus einem kurzen diskontinuierlichen Empfangszustand, einem langen diskontinuierlichen Empfangszustand und einem tiefen diskontinuierlichen Empfangszustand umfasst; und den Messzyklus zu verlängern, wenn ermittelt wird,
dass die erfassten Messergebnisse der Kanalbedingungen innerhalb der Messzyklen geringer sind als ein eingestellter Schwellenwert; und den Messzyklus zu verkürzen, wenn ermittelt wird, dass die erfassten Messergebnisse der Kanalbedingungen innerhalb der Messzyklen nicht geringer sind als der eingestellte Schwellenwert.

23. Benutzergerät nach Anspruch 16, das außerdem umfasst:
eine Empfangseinheit, die konfiguriert ist, Informationen zu empfangen, die von einer Basisstation gesendet werden;
wobei die Ausführungseinheit außerdem konfiguriert ist, einen kurzen diskontinuierlichen Empfang und/oder einen langen diskontinuierlichen Empfang auszuführen;
wobei die Verarbeitungseinheit umfasst:
eine Verarbeitungsuntereinheit, die konfiguriert ist, die Verarbeitung gemäß der Benachrichtigungsinformation der Abwärtsübertragung auszuführen, wenn die Benachrichtigungsinformation der Abwärtsübertragung, die zu dem Benutzergerät gehört, von der Erkennungseinheit erkannt wird;
eine Zähleruntereinheit, die konfiguriert ist, einen Zähler einzustellen, der verwendet wird, die Anzahl der abgelaufenen kurzen diskontinuierlichen Empfangszyklen zu zählen, um weiterzuzählen, wenn ermittelt wird, dass es nicht notwendig ist, dass Daten durch das Benutzergerät übertragen werden, und die Ausführungseinheit in dem kurzen diskontinuierlichen Empfangszustand ist und Zeitplaninformation einer Aufwärtsübertragung von der Basisstation in der Empfangseinheit empfangen wird;
und/oder einen Zähler einzustellen, der verwendet wird, die Anzahl der abgelaufenen langen diskontinuierlichen Empfangszyklen zu zählen, um weiterzuzählen, wenn ermittelt wird, dass es nicht notwendig ist, dass Daten durch das Benutzergerät übertragen werden, und die Ausführungseinheit in dem langen diskontinuierlichen Empfangszustand ist und eine Zeitplaninformation einer Aufwärtsübertragung von der Basisstation in der Empfangseinheit empfangen wird; und einen Zähler, der konfiguriert ist, die Anzahl der abgelaufenen kurzen diskontinuierlichen Empfangszyklen und/oder der abgelaufenen langen diskontinuierlichen Empfangszyklen gemäß der Anweisung von der Zähleruntereinheit zu zählen.

24. Basisstation, umfassend:
eine Konfiguriereinheit, die konfiguriert ist, einen diskontinuierlichen Empfang für ein Benutzergerät in einem verbundenen Zustand zu konfigurieren, wobei der diskontinuierliche Empfang einen tiefen diskontinuierlichen Empfang umfasst;
eine Übertragungseinheit, die konfiguriert ist, eine Benachrichtigungsinformation einer Abwärtsübertragung des Benutzergerätes innerhalb nur eines gemeinsamen Suchraums zwischen dem gemeinsamen Suchraum und einem spezifischen Suchraum von einem oder mehreren Übertragungszeitintervallen zu übertragen,
wenn das Benutzergerät in einem routinemäßigen aktiven Zustand des tiefen diskontinuierlichen Empfangszustandes ist, und nicht in einem getriggerten aktiven Zustand ist, sodass das Benutzergerät benachrichtigt wird, eine Verarbeitung gemäß der Benachrichtigungsinformation der Abwärtsübertragung auszuführen.

25. Basisstation nach Anspruch 24, wobei:
die Übertragungseinheit speziell konfiguriert ist,
einen Befehl für den physischen Abwärtsübertragungssteuerkanal, der mit einer vorübergehenden Identität eines Mobilfunk/Funknetzes des Benutzergerätes verschlüsselt wurde, innerhalb nur eines gemeinsamen Suchraums zwischen dem gemeinsamen Suchraum und dem spezifischen Suchraum von einem oder mehreren Übertragungszeitintervallen zu übertragen, wenn das Benutzergerät in dem routinemäßigen aktiven Zustand des tiefen diskontinuierlichen Empfangszustands ist und nicht in dem getriggerten aktiven Zustand ist;
oder
eine Funkrufnachricht innerhalb nur eines gemeinsamen Suchraums zwischen dem gemeinsamen Suchraum und dem spezifischen Suchraum von einem oder mehreren Übertragungszeitintervallen zu übertragen, wenn das Benutzergerät in dem routinemäßigen aktiven Zustand des tiefen diskontinuierlichen Empfangszustands ist und nicht in dem getriggerten aktiven Zustand ist, wobei die Funkrufnachricht eine Kennung des Benutzergerätes und eine Kennung einer Empfangsanzeige für Abwärtsübertragungsdaten mitführt oder eine Kennung des Benutzergerätes und eine Information zur Ressourcenzuordnung für Abwärtsübertragungsdaten mitführt oder
eine Kennung des Benutzergerätes und die Abwärtsübertragungsdaten mitführt;
oder
einen Befehl für einen physischen Abwärtsübertragungssteuerkanal, der mit einer vorübergehenden Identität eines Mobilfunk/Funknetzes des Benutzergerätes verschlüsselt wurde, innerhalb nur eines gemeinsamen Suchraums zwischen dem gemeinsamen Suchraum und dem spezifischen Suchraum von einem oder mehreren Übertragungszeitintervallen zu übertragen, wenn das Benutzergerät bei einer Aufwärtsübertragung nicht synchronisiert ist, und wenn das Benutzergerät in dem routinemäßigen aktiven Zustand des tiefen diskontinuierlichen Empfangszustands ist und nicht in dem getriggerten aktiven Zustand ist, sodass das Benutzergerät benachrichtigt wird, einen Direktzugriff gemäß dem Befehl für den physischen Abwärtsübertragungssteuerkanal auszuführen;
oder
eine Funkrufnachricht innerhalb nur eines gemeinsamen Suchraums zwischen dem gemeinsamen Suchraum und dem spezifischen Suchraum von einem oder mehreren Übertragungszeitintervallen zu übertragen, wenn das Benutzergerät in einer Aufwärtsübertragung nicht synchronisiert ist und das Benutzergerät in dem routinemäßigen aktiven Zustand des tiefen diskontinuierlichen Empfangszustands ist und nicht in dem getriggerten aktiven Zustand ist, wobei die Funkrufnachricht eine Kennung des Benutzergerätes und eine Kennung einer Anpassungsanzeige für eine fehlende Synchronisation mitführt, sodass das Benutzergerät benachrichtigt wird, einen Direktzugriff auszuführen.

26. Basisstation nach Anspruch 24, wobei:
die Übertragungseinheit außerdem konfiguriert ist, eine Benachrichtigungsinformation für das Eintreten in den tiefen diskontinuierlichen Empfangszustand oder einen langen diskontinuierlichen Empfangszustand an das Benutzergerät zu übertragen, wenn ermittelt wird, dass es nicht notwendig ist, dass Daten durch das Benutzergerät übertragen werden, nachdem das Benutzergerät den diskontinuierlichen Empfangszustand verlassen hat, sodass das Benutzergerät benachrichtigt wird, direkt in den tiefen diskontinuierlichen Empfangszustand oder den langen diskontinuierlichen Empfangszustand einzutreten;
wobei der diskontinuierliche Empfangszustand, der von dem Benutzergerät verlassen wurde, der tiefe diskontinuierliche Empfangszustand oder der lange diskontinuierliche Empfangszustand ist.

## Revendications

1. Procédé de traitement, dans lequel un équipement utilisateur dans un état connecté est configuré de manière à être en réception discontinue, et la réception discontinue comprend une réception discontinue profonde, et le procédé comprend :
lorsque l'équipement utilisateur est dans un état actif de routine de l'état de réception discontinue profonde, et n'est pas dans un état actif déclenché, la détection, par l'équipement utilisateur, d'informations de notification de transmission de liaison descendante appartenant à l'équipement utilisateur uniquement à l'intérieur d'un espace de recherche commun entre l'espace de recherche commun et un espace de recherche spécifique de chaque intervalle de temps de transmission ; et
l'exécution, par l'équipement utilisateur, d'un traitement conformément aux informations de notification de transmission de liaison descendante lors de la détection des informations de notification de transmission de liaison descendante appartenant à l'équipement utilisateur.

2. Procédé selon la revendication 1, dans lequel :
la détection des informations de notification de transmission de liaison descendante appartenant à l'équipement utilisateur, comprend :
la détection d'une commande de canal de commande de liaison descendante physique embrouillée avec une identité temporaire de réseau radio cellulaire de l'équipement utilisateur ;
l'exécution, par l'équipement utilisateur, du traitement conformément aux informations de notification de transmission de liaison descendante, comprend :
le passage, par l'équipement utilisateur, dans l'état actif déclenché conformément à la commande de canal de commande de liaison descendante physique, et la réception de données ;
ou
la détection des informations de notification de transmission de liaison descendante appartenant à l'équipement utilisateur, comprend :
la détection d'un message de recherche de personne acheminant un identifiant de l'équipement utilisateur et un identifiant d'indication de réception de données de liaison descendante ;
l'exécution, par l'équipement utilisateur, du traitement conformément aux informations de notification de transmission de liaison descendante, comprend :
le passage, par l'équipement utilisateur, dans l'état actif déclenché conformément à l'identifiant d'indication de réception de données de liaison descendante, et la réception de données de liaison descendante ;
ou
la détection des informations de notification de transmission de liaison descendante appartenant à l'équipement utilisateur, comprend :
la détection d'un message de recherche de personne acheminant un identifiant de l'équipement utilisateur et des informations d'allocation de ressources de données de liaison descendante ;
l'exécution, par l'équipement utilisateur, du traitement conformément aux informations de notification de transmission de liaison descendante, comprend :
le passage, par l'équipement utilisateur, dans l'état actif déclenché conformément aux informations d'allocation de ressources de données de liaison descendante, et la réception de données de liaison descendante au cours d'un intervalle de temps de transmission spécifié ;
ou
la détection des informations de notification de transmission de liaison descendante appartenant à l'équipement utilisateur, comprend :
la détection d'un message de recherche de personne acheminant un identifiant de l'équipement utilisateur et des données de liaison descendante ;
l'exécution, par l'équipement utilisateur, du traitement conformément aux informations de notification de transmission de liaison descendante, comprend :
le passage, par l'équipement utilisateur, dans l'état actif déclenché conformément aux données de liaison descendante acheminées par le message de recherche de personne, et la réception des données de liaison descendante.

3. Procédé selon la revendication 1, dans lequel :
la détection des informations de notification de transmission de liaison descendante appartenant à l'équipement utilisateur, comprend :
la détection d'une commande de canal de commande de liaison descendante physique embrouillée avec une identité temporaire de réseau radio cellulaire de l'équipement utilisateur ;
l'exécution du traitement conformément aux informations de notification de transmission de liaison descendante, comprend :
l'exécution d'une opération d'accès aléatoire, conformément à une commande d'accès aléatoire acheminée par la commande de canal de commande de liaison descendante physique ;
ou
la détection des informations de notification de transmission de liaison descendante appartenant à l'équipement utilisateur, comprend :
la détection d'un message de recherche de personne acheminant un identifiant de l'équipement utilisateur et un identifiant d'indication d'ajustement de désynchronisation, l'identifiant d'indication d'ajustement de désynchronisation étant utilisé lorsqu'il existe des données de liaison descendante devant être reçues et que l'UE est dans un état de désynchronisation de liaison montante ;
l'exécution, par l'équipement utilisateur, du traitement conformément aux informations de notification de transmission de liaison descendante, comprend :
l'exécution, par l'équipement utilisateur, d'une opération d'accès aléatoire conformément à l'identifiant d'indication d'ajustement de désynchronisation acheminé par le message de recherche de personne.

4. Procédé selon la revendication 1, comprenant en outre :
la sortie, par l'équipement utilisateur, de l'état de réception discontinue profonde lors de la détection des informations de notification de transmission de liaison descendante appartenant à l'équipement utilisateur,
le passage, par l'équipement utilisateur, dans un état de réception discontinue courte lorsque l'équipement utilisateur détermine qu'aucune donnée n'est transmise dans un délai spécifié ;
le passage dans un état de réception discontinue longue lorsqu'aucune donnée n'est transmise dans un délai spécifié après le passage dans l'état de réception discontinue courte ;
le passage de nouveau dans l'état de réception discontinue profonde lorsqu'aucune donnée n'est transmise dans un délai spécifié après le passage dans l'état de réception discontinue longue.

5. Procédé selon la revendication 4, dans lequel le passage dans l'état de réception discontinue profonde si aucune donnée n'est transmise dans le délai spécifié après le passage dans l'état de réception discontinue longue, comprend :
l'acquisition de résultats de mesure d'état de canal au cours d'un nombre spécifié de cycles de mesure lorsqu'aucune donnée n'est transmise dans un délai spécifié après le passage dans l'état de réception discontinue longue ;
le passage dans l'état de réception discontinue profonde lorsqu'un degré de variation parmi les résultats de mesure d'état de canal acquis est inférieur à une valeur de seuil définie ;
le fait de rester dans l'état de réception discontinue longue lorsque le degré de variation parmi les résultats de mesure d'état de canal acquis n'est pas inférieur à la valeur de seuil définie.

6. Procédé selon la revendication 1, comprenant en outre :
la sortie, par l'équipement utilisateur, de l'état de réception discontinue profonde lors de la détection des informations de notification de transmission de liaison descendante appartenant à l'équipement utilisateur ;
l'acquisition d'informations de notification de passage dans l'état de réception discontinue profonde transmises par une station de base lorsqu'il est déterminé qu'aucune donnée ne doit être transmise par l'équipement utilisateur ;
le passage dans l'état de réception discontinue profonde conformément aux informations de notification de passage dans l'état de réception discontinue profonde ;
ou
la sortie, par l'équipement utilisateur, de l'état de réception discontinue profonde lors de la détection des informations de notification de transmission de liaison descendante appartenant à l'équipement utilisateur ;
le passage, par l'équipement utilisateur, dans l'état de réception discontinue profonde lorsqu'il est déterminé qu'aucune donnée ne doit être transmise par l'équipement utilisateur.

7. Procédé selon la revendication 6, dans lequel le passage, par l'équipement utilisateur, dans l'état de réception discontinue profonde comprend :
l'acquisition de résultats de mesure d'état de canal au cours d'un nombre spécifié de cycles de mesure ;
le passage direct dans l'état de réception discontinue profonde lorsqu'un degré de variation parmi les résultats de mesure d'état de canal acquis est inférieur à une valeur de seuil définie ;
le passage dans un état de réception discontinue courte lorsque le degré de variation parmi les résultats de mesure d'état de canal acquis n'est pas inférieur à la valeur de seuil définie ; le passage dans un état de réception discontinue longue lorsqu'aucune donnée n'est transmise dans un délai spécifié après le passage dans l'état de réception discontinue courte ; le passage dans l'état de réception discontinue profonde lorsqu'aucune donnée n'est transmise dans un délai spécifié après le passage dans l'état de réception discontinue longue ;
ou comprend :
l'acquisition de résultats de mesure d'état de canal au cours d'un nombre spécifié de cycles de mesure ;
le passage direct dans l'état de réception discontinue profonde lorsqu'un degré de variation parmi les résultats de mesure d'état de canal acquis est inférieur à une valeur de seuil définie et lorsqu'une valeur absolue des résultats de mesure d'état de canal est supérieure à une valeur de seuil définie ;
sinon, le passage dans un état de réception discontinue courte ; le passage dans un état de réception discontinue longue lorsqu'aucune donnée n'est transmise dans un délai spécifié après le passage dans l'état de réception discontinue courte ; le passage dans l'état de réception discontinue profonde lorsqu'aucune donnée n'est transmise dans un délai spécifié après le passage dans l'état de réception discontinue longue.

8. Procédé selon la revendication 1, comprenant en outre :
l'acquisition, par l'équipement utilisateur, de résultats de mesure d'état de canal au cours d'un nombre spécifié de cycles de mesure dans un état actif de routine de l'état de réception discontinue, l'état de réception discontinue comprenant en outre un état de réception discontinue courte et/ou un état de réception discontinue longue ;
la prolongation du cycle de mesure lorsqu'il est déterminé que les résultats de mesure d'état de canal acquis sont inférieurs à une valeur de seuil définie ; et
le raccourcissement du cycle de mesure lorsqu'il est déterminé que les résultats de mesure d'état de canal acquis ne sont pas inférieurs à la valeur de seuil définie.

9. Procédé selon la revendication 1, dans lequel l'état de réception discontinue configuré comprend en outre un état de réception discontinue courte et/ou un état de réception discontinue longue ;
le procédé comprend en outre :
la réception d'une information de planification de liaison montante d'une station de base lorsque l'équipement utilisateur est dans l'état de réception discontinue courte, et
le chargement d'un compteur utilisé pour compter le nombre de cycles de réception discontinue courte s'étant écoulés qu'il est nécessaire de continuer de compter lorsqu'il est déterminé qu'aucune donnée ne doit être transmise par l'équipement utilisateur ;
et/ou la réception d'une information de planification de liaison montante de la station de base lorsque l'équipement utilisateur est dans un état de réception discontinue longue, le chargement d'un compteur utilisé pour compter le nombre de cycles de réception discontinue longue s'étant écoulés qu'il est nécessaire de continuer de compter lorsqu'il est déterminé qu'aucune donnée ne doit être transmise par l'équipement utilisateur.

10. Procédé selon la revendication 1, dans lequel :
l'exécution, par l'équipement utilisateur, d'un traitement conformément aux informations de notification de transmission de liaison descendante lors de la détection des informations de notification de transmission de liaison descendante appartenant à l'équipement utilisateur, comprend :
lors de la détection des informations de notification de transmission de liaison descendante appartenant à l'équipement utilisateur, le passage, par l'équipement utilisateur, dans l'état actif déclenché, la transmission de données de liaison montante conformément aux informations de notification de transmission de liaison descendante, et le fait de rester dans l'état de réception discontinue profonde.

11. Procédé selon la revendication 1, comprenant en outre :
le passage, par l'équipement utilisateur, dans un état de réception discontinue longue ;
lors de la détection des informations de notification de transmission de liaison descendante appartenant à l'équipement utilisateur, le passage, par l'équipement utilisateur, dans l'état actif déclenché, la transmission de données de liaison montante conformément aux informations de notification de transmission de liaison descendante, et le fait de rester dans l'état de réception discontinue longue.

12. Procédé selon l'une quelconque des revendications 1 à 11, dans lequel :
l'état de réception discontinue profonde est un état dans lequel l'équipement utilisateur détecte les informations de notification de transmission de liaison descendante conformément à un cycle spécifié ;
l'état actif de routine est un état actif normal dans lequel passe l'équipement utilisateur conformément à un cycle de la réception discontinue profonde ; et
l'état actif déclenché est un état actif dans lequel passe l'équipement utilisateur dans l'état actif de routine lorsqu'il est déterminé qu'il existe des données devant être émises-reçues.

13. Procédé de communication, comprenant :
la configuration, par une station de base, d'une réception discontinue pour un équipement utilisateur dans un état connecté, la réception discontinue comprenant une réception discontinue profonde ;
la transmission, par la station de base, d'informations de notification de transmission de liaison descendante de l'équipement utilisateur uniquement à l'intérieur d'un espace de recherche commun entre l'espace de recherche commun et un espace de recherche spécifique d'un ou plusieurs intervalles de temps de transmission lorsque l'équipement utilisateur est dans un état actif de routine de l'état de réception discontinue profonde, et n'est pas dans un état actif déclenché, de manière à notifier à l'équipement utilisateur d'exécuter un traitement conformément aux informations de notification de transmission de liaison descendante.

14. Procédé selon la revendication 13, dans lequel la transmission, par la station de base, des informations de notification de transmission de liaison descendante de l'équipement utilisateur comprend l'une des étapes suivantes :
la transmission, par la station de base, d'une commande de canal de commande de liaison descendante physique embrouillée avec une identité temporaire de réseau radio cellulaire de l'équipement utilisateur ;
la transmission, par la station de base, d'un message de recherche de personne acheminant un identifiant de l'équipement utilisateur et un identifiant d'indication de réception de données de liaison descendante, ou acheminant un identifiant de l'équipement utilisateur et des informations d'allocation de ressources de données de liaison descendante, ou acheminant un identifiant de l'équipement utilisateur et des données de liaison descendante ;
la transmission, par la station de base, d'une commande de canal de commande de liaison descendante physique embrouillée avec une identité temporaire de réseau radio cellulaire de l'équipement utilisateur lorsque l'équipement utilisateur est désynchronisé dans une liaison montante, de manière à notifier à l'équipement utilisateur d'exécuter un accès aléatoire conformément à la commande de canal de commande de liaison descendante physique ;
la transmission, par la station de base, d'un message de recherche de personne acheminant un identifiant de l'équipement utilisateur et un identifiant d'indication d'ajustement de désynchronisation, de manière à notifier à l'équipement utilisateur d'exécuter un accès aléatoire.

15. Procédé selon la revendication 13, comprenant en outre : la transmission d'informations de notification de passage dans l'état de réception discontinue profonde ou dans un état de réception discontinue longue à l'équipement utilisateur lorsqu'il est déterminé qu'aucune donnée ne doit être transmise par l'équipement utilisateur après que l'équipement utilisateur est sorti de l'état de réception discontinue, de manière à notifier à l'équipement utilisateur de passer directement dans l'état de réception discontinue profonde ou dans l'état de réception discontinue longue,
l'état de réception discontinue, dont l'équipement utilisateur est sorti, étant l'état de réception discontinue profonde ou l'état de réception discontinue longue.

16. Equipement utilisateur, comprenant :
une unité de configuration d'état, configurée pour configurer une réception discontinue conformément à une instruction dans un état connecté, la réception discontinue comprenant une réception discontinue profonde ;
une unité d'exécution, configurée pour passer dans un état de réception discontinue profonde conformément à un paramètre défini de la réception discontinue profonde configurée par l'unité de configuration d'état ;
une unité de détection, configurée pour détecter des informations de notification de transmission de liaison descendante appartenant à l'équipement utilisateur uniquement à l'intérieur d'un espace de recherche commun entre l'espace de recherche commun et un espace de recherche spécifique de chaque intervalle de temps de transmission, lorsque l'unité d'exécution passe dans un état actif de routine de l'état de réception discontinue profonde, et n'est pas dans un état actif déclenché ;
et
une unité de traitement, configurée pour exécuter un traitement conformément aux informations de notification de transmission de liaison descendante lorsque les informations de notification de transmission de liaison descendante appartenant à l'équipement utilisateur sont détectées par l'unité de détection.

17. Equipement utilisateur selon la revendication 16, dans lequel :
l'unité de détection est spécifiquement configurée pour détecter une commande de canal de commande de liaison descendante physique embrouillée avec une identité temporaire de réseau radio cellulaire de l'équipement utilisateur uniquement à l'intérieur de l'espace de recherche commun entre l'espace de recherche commun et l'espace de recherche spécifique de chaque intervalle de temps de transmission, lorsque l'unité d'exécution passe dans l'état actif de routine de la réception discontinue profonde, et n'est pas dans l'état actif déclenché ;
l'unité de traitement est spécifiquement configurée pour notifier à l'unité d'exécution de passer dans l'état actif déclenché, lorsque la commande de canal de commande de liaison descendante physique embrouillée avec l'identité temporaire de réseau radio cellulaire de l'équipement utilisateur est détectée par l'unité de détection, et recevoir des données conformément à la commande de canal de commande de liaison descendante physique ;
l'unité d'exécution est en outre configurée pour passer dans l'état actif déclenché conformément à la notification de l'unité de traitement ;
ou
l'unité de détection est spécifiquement configurée pour détecter un message de recherche de personne acheminant un identifiant de l'équipement utilisateur et un identifiant d'indication de réception de données de liaison descendante uniquement à l'intérieur de l'espace de recherche commun entre l'espace de recherche commun et l'espace de recherche spécifique de chaque intervalle de temps de transmission, lorsque l'unité d'exécution passe dans l'état actif de routine de la réception discontinue profonde, et n'est pas dans l'état actif déclenché ;
l'unité de traitement est spécifiquement configurée pour notifier à l'unité d'exécution de passer dans l'état actif déclenché, lorsque le message de recherche de personne acheminant l'identifiant de l'équipement utilisateur et l'identifiant d'indication de réception de données de liaison descendante est détecté par l'unité de détection, et recevoir des données de liaison descendante conformément à l'identifiant d'indication de réception de données de liaison descendante ;
l'unité d'exécution est en outre configurée pour passer dans l'état actif déclenché conformément à la notification de l'unité de traitement ;
ou
l'unité de détection est spécifiquement configurée pour détecter un message de recherche de personne acheminant un identifiant de l'équipement utilisateur et des informations d'allocation de ressources de données de liaison descendante uniquement à l'intérieur de l'espace de recherche commun entre l'espace de recherche commun et l'espace de recherche spécifique de chaque intervalle de temps de transmission, lorsque l'unité d'exécution passe dans l'état actif de routine de la réception discontinue profonde, et n'est pas dans l'état actif déclenché ;
l'unité de traitement est spécifiquement configurée pour notifier à l'unité d'exécution de passer dans l'état actif déclenché, lorsque le message de recherche de personne acheminant l'identifiant de l'équipement utilisateur et les informations d'allocation de ressources de données de liaison descendante est détecté par l'unité de détection, et recevoir les données de liaison descendante conformément aux informations d'allocation de ressources de données de liaison descendante au cours d'un intervalle de temps de transmission spécifié ;
l'unité d'exécution est en outre configurée pour passer dans l'état actif déclenché conformément à la notification de l'unité de traitement ;
ou
l'unité de détection est spécifiquement configurée pour détecter un message de recherche de personne acheminant un identifiant de l'équipement utilisateur et des données de liaison descendante uniquement à l'intérieur de l'espace de recherche commun entre l'espace de recherche commun et l'espace de recherche spécifique de chaque intervalle de temps de transmission, lorsque l'unité d'exécution passe dans l'état actif de routine de la réception discontinue profonde, et n'est pas dans l'état actif déclenché ;
l'unité de traitement est spécifiquement configurée pour notifier à l'unité d'exécution de passer dans l'état actif déclenché, lorsque le message de recherche de personne acheminant l'identifiant de l'équipement utilisateur et les données de liaison descendante est détecté par l'unité de détection, et recevoir les données de liaison descendante acheminées par le message de recherche de personne ;
l'unité d'exécution est en outre configurée pour passer dans l'état actif déclenché conformément à la notification de l'unité de traitement ;
ou
l'unité de détection est spécifiquement configurée pour détecter une commande de canal de commande de liaison descendante physique embrouillée avec une identité temporaire de réseau radio cellulaire de l'équipement utilisateur uniquement à l'intérieur de l'espace de recherche commun entre l'espace de recherche commun et l'espace de recherche spécifique de chaque intervalle de temps de transmission, lorsque l'unité d'exécution passe dans l'état actif de routine de la réception discontinue profonde, et n'est pas dans l'état actif déclenché ;
l'unité de traitement est spécifiquement configurée pour exécuter une opération d'accès aléatoire lorsque la commande de canal de commande de liaison descendante physique embrouillée avec une identité temporaire de réseau radio cellulaire de l'équipement utilisateur est détectée par l'unité de détection ;
ou
l'unité de détection est spécifiquement configurée pour détecter un message de recherche de personne acheminant un identifiant de l'équipement utilisateur et un identifiant d'indication d'ajustement de désynchronisation uniquement à l'intérieur de l'espace de recherche commun entre l'espace de recherche commun et l'espace de recherche spécifique de chaque intervalle de temps de transmission, lorsque l'unité d'exécution passe dans l'état actif de routine de la réception discontinue profonde, et n'est pas dans l'état actif déclenché ;
l'unité de traitement est spécifiquement configurée pour exécuter une opération d'accès aléatoire lorsque le message de recherche de personne acheminant l'identifiant de l'équipement utilisateur et un identifiant d'indication d'ajustement de désynchronisation est détecté par l'unité de détection.

18. Equipement utilisateur selon la revendication 16, dans lequel :
l'unité de traitement est en outre configurée pour notifier à l'unité d'exécution de sortir de l'état de réception discontinue profonde lorsque les informations de notification de transmission de liaison descendante appartenant à l'équipement utilisateur sont détectées par l'unité de détection ;
l'unité d'exécution est en outre configurée pour sortir de l'état de réception discontinue profonde conformément à l'indication de l'unité de traitement, et passer dans un état de réception discontinue courte lorsqu'aucune donnée n'est transmise dans un délai spécifié après la sortie de l'état de réception discontinue profonde ;
passer dans un état de réception discontinue longue lorsqu'aucune donnée n'est transmise dans un délai spécifié après le passage dans l'état de réception discontinue courte ; le passage de nouveau dans l'état de réception discontinue profonde lorsqu'aucune donnée n'est transmise dans le délai spécifié après le passage dans l'état de réception discontinue longue.

19. Equipement utilisateur selon la revendication 18, comprenant en outre : une unité de mesure, configurée pour acquérir des résultats de mesure d'état de canal au cours d'un nombre spécifié de cycles de mesure lorsqu'aucune donnée n'est transmise dans un délai spécifié après que l'unité d'exécution est passée dans l'état de réception discontinue longue ;
l'unité de traitement est en outre configurée pour ordonner à l'unité d'exécution de passer dans l'état de réception discontinue profonde lorsqu'un degré de variation parmi les résultats de mesure d'état de canal acquis par l'unité de mesure est inférieur à une valeur de seuil définie ; et ordonner à l'unité d'exécution de rester dans l'état de réception discontinue longue lorsque le degré de variation parmi les résultats de mesure d'état de canal acquis n'est pas inférieur à la valeur de seuil définie ;
l'unité d'exécution est en outre configurée pour passer dans l'état de réception discontinue profonde ou dans l'état de réception discontinue longue conformément à l'indication de l'unité de traitement.

20. Equipement utilisateur selon la revendication 16, dans lequel :
l'unité de traitement est en outre configurée pour notifier à l'unité d'exécution de sortir de l'état de réception discontinue profonde lorsque les informations de notification de transmission de liaison descendante appartenant à l'équipement utilisateur sont détectées par l'unité de détection ;
et est en outre configurée pour acquérir des informations de notification de passage dans l'état de réception discontinue profonde envoyées par une station de base lorsqu'il est déterminé qu'aucune donnée ne doit être transmise par l'équipement utilisateur après que l'unité d'exécution est sortie de l'état de réception discontinue profonde, et ordonner à l'unité d'exécution de passer dans l'état de réception discontinue profonde conformément aux informations de notification ;
ou est en outre configurée pour ordonner à l'unité d'exécution de passer dans l'état de réception discontinue profonde lorsqu'il est déterminé qu'aucune donnée ne doit être transmise par l'équipement utilisateur après que l'unité d'exécution est sortie de l'état de réception discontinue profonde ;
l'unité d'exécution est en outre configurée pour sortir de, ou passer dans l'état de réception discontinue profonde conformément à l'indication de l'unité de traitement.

21. Equipement utilisateur selon la revendication 20, comprenant en outre :
une unité de mesure, configurée pour acquérir des résultats de mesure d'état du canal au cours d'un nombre spécifié de cycles de mesure ;
l'unité de traitement est en outre configurée pour ordonner à l'unité d'exécution de passer directement dans l'état de réception discontinue profonde lorsqu'un degré de variation parmi les résultats de mesure d'état du canal acquis par l'unité de mesure est inférieur à une valeur de seuil définie ;
ordonner à l'unité d'exécution de passer dans l'état de réception discontinue courte lorsque le degré de variation parmi les résultats de mesure d'état du canal acquis par l'unité de mesure n'est pas inférieur à la valeur de seuil définie, ordonner à l'unité d'exécution de passer dans un état de réception discontinue longue lorsqu'aucune donnée n'est transmise dans un délai spécifié après que l'unité d'exécution est passée dans l'état de réception discontinue courte, et ordonner à l'unité d'exécution de passer dans l'état de réception discontinue profonde lorsqu'aucune donnée n'est transmise dans un délai spécifié après que l'unité d'exécution est passée dans l'état de réception discontinue longue ;
ou
ordonner à l'unité d'exécution de passer directement dans l'état de réception discontinue profonde lorsqu'un degré de variation parmi les résultats de mesure d'état du canal acquis par l'unité de mesure est inférieur à une valeur de seuil définie, et lorsqu'une valeur absolue des résultats de mesure d'état du canal est supérieure à la valeur de seuil définie ; sinon, ordonner à l'unité d'exécution de passer dans l'état de réception discontinue courte ; ordonner à l'unité d'exécution de passer dans l'état de réception discontinue longue lorsqu'aucune donnée n'est transmise dans un délai spécifié après que l'unité d'exécution est passée dans l'état de réception discontinue courte ; et ordonner à l'unité d'exécution de passer dans l'état de réception discontinue profonde lorsqu'aucune donnée n'est transmise dans un délai spécifié après que l'unité d'exécution est passée dans l'état de réception discontinue longue ;
l'unité d'exécution est en outre configurée pour passer dans l'état de réception discontinue courte ou dans l'état de réception discontinue longue conformément à l'indication de l'unité de traitement.

22. Equipement utilisateur selon la revendication 16, dans lequel :
l'unité d'exécution est en outre configurée pour exécuter une réception discontinue courte et/ou une réception discontinue longue ;
l'unité de mesure est en outre configurée pour acquérir un nombre spécifié de résultats de mesure d'état du canal au cours de cycles de mesure lorsque l'unité d'exécution passe dans l'état actif de routine de la réception discontinue, la réception discontinue comprenant l'un d'un état de réception discontinue courte, d'un état de réception discontinue longue et d'un état de réception discontinue profonde ; et prolonger le cycle de mesure lorsqu'il est déterminé que les résultats de mesure d'état du canal acquis au cours des cycles de mesure sont inférieurs à une valeur de seuil définie ; et raccourcir le cycle de mesure lorsqu'il est déterminé que les résultats de mesure d'état du canal acquis au cours des cycles de mesure ne sont pas inférieurs à la valeur de seuil définie.

23. Equipement utilisateur selon la revendication 16, comprenant en outre :
une unité de réception, configurée pour recevoir des informations envoyées par une station de base ;
l'unité d'exécution est en outre configurée pour exécuter une réception discontinue courte et/ou une réception discontinue longue ;
l'unité de traitement comprend :
une sous-unité de traitement, configurée pour exécuter le traitement conformément aux informations de notification de transmission de liaison descendante lorsque les informations de notification de transmission de liaison descendante appartenant à l'équipement utilisateur sont détectées par l'unité de détection ;
une sous-unité de comptage, configurée pour charger un compteur utilisé pour compter le nombre de cycles de réception discontinue courte s'étant écoulés qu'il est nécessaire de continuer de compter lorsqu'il est déterminé qu'aucune donnée ne doit être transmise par l'équipement utilisateur, et que l'unité d'exécution est dans un état de réception discontinue courte et qu'une information de planification de liaison montante de la station de base est reçue par l'unité de réception ; et/ou charger un compteur utilisé pour compter le nombre de cycles de réception discontinue longue s'étant écoulés qu'il est nécessaire de continuer de compter lorsqu'il est déterminé qu'aucune donnée ne doit être transmise par l'équipement utilisateur, et que l'unité d'exécution est dans un état de réception discontinue longue, et qu'une information de planification de liaison montante de la station de base est reçue par l'unité de réception ; et
un compteur, configuré pour compter le nombre des cycles de réception discontinue courte s'étant écoulés, et/ou les cycles de réception discontinue longue s'étant écoulés, conformément à l'instruction de la sous-unité de comptage.

24. Station de base, comprenant :
une unité de configuration, configurée pour configurer une réception discontinue pour un équipement utilisateur dans un état connecté, dans lequel la réception discontinue comprend une réception discontinue profonde ;
une unité de transmission, configurée pour transmettre des informations de notification de transmission de liaison descendante de l'équipement utilisateur uniquement à l'intérieur d'un espace de recherche commun entre l'espace de recherche commun et un espace de recherche spécifique d'un ou plusieurs intervalles de temps de transmission lorsque l'équipement utilisateur est dans un état actif de routine de l'état de réception discontinue profonde, et n'est pas dans un état actif déclenché, de manière à notifier à l'équipement utilisateur d'exécuter un traitement conformément aux informations de notification de transmission de liaison descendante.

25. Station de base selon la revendication 24, dans laquelle :
l'unité de transmission est spécifiquement configurée pour transmettre une commande de canal de commande de liaison descendante physique embrouillée avec une identité temporaire de réseau radio cellulaire de l'équipement utilisateur uniquement à l'intérieur de l'espace de recherche commun entre l'espace de recherche commun et l'espace de recherche spécifique d'un ou plusieurs intervalles de temps de transmission, lorsque l'équipement utilisateur est dans l'état actif de routine de l'état de réception discontinue profonde, et n'est pas dans l'état actif déclenché ;
ou
transmettre un message de recherche de personne uniquement à l'intérieur de l'espace de recherche commun entre l'espace de recherche commun et l'espace de recherche spécifique d'un ou plusieurs intervalles de temps de transmission, lorsque l'équipement utilisateur est dans l'état actif de routine de l'état de réception discontinue profonde, et n'est pas dans l'état actif déclenché, le message de recherche de personne acheminant un identifiant de l'équipement utilisateur et un identifiant d'indication de réception de données de liaison descendante, ou acheminant un identifiant de l'équipement utilisateur et des informations d'allocation de ressources de données de liaison descendante, ou acheminant un identifiant de l'équipement utilisateur et des données de liaison descendante ;
ou
transmettre une commande de canal de commande de liaison descendante physique embrouillée avec une identité temporaire de réseau radio cellulaire de l'équipement utilisateur uniquement à l'intérieur de l'espace de recherche commun entre l'espace de recherche commun et l'espace de recherche spécifique d'un ou plusieurs intervalles de temps de transmission, lorsque l'équipement utilisateur est désynchronisé dans une liaison montante, et l'équipement utilisateur est dans l'état actif de routine de l'état de réception discontinue profonde, et n'est pas dans l'état actif déclenché, de manière à notifier à l'équipement utilisateur d'exécuter un accès aléatoire conformément à la commande de canal de commande de liaison descendante physique ;
ou
transmettre un message de recherche de personne uniquement à l'intérieur de l'espace de recherche commun entre l'espace de recherche commun et l'espace de recherche spécifique d'un ou plusieurs intervalles de temps de transmission, lorsque l'équipement utilisateur est désynchronisé dans une liaison montante, et l'équipement utilisateur est dans l'état actif de routine de l'état de réception discontinue profonde, et n'est pas dans l'état actif déclenché, le message de recherche de personne acheminant un identifiant de l'équipement utilisateur et un identifiant d'indication d'ajustement de désynchronisation, de manière à notifier à l'équipement utilisateur d'exécuter un accès aléatoire.

26. Station de base selon la revendication 24, dans laquelle :
l'unité de transmission est en outre configurée pour transmettre des informations de notification de passage dans l'état de réception discontinue profonde ou dans un état de réception discontinue longue à l'équipement utilisateur lorsqu'il est déterminé qu'aucune donnée ne doit être transmise par l'équipement utilisateur après que l'équipement utilisateur est sorti de l'état de réception discontinue, de manière à notifier à l'équipement utilisateur de passer directement dans l'état de réception discontinue profonde ou dans l'état de réception discontinue longue,
l'état de réception discontinue, dont l'équipement utilisateur est sorti, étant l'état de réception discontinue profonde ou l'état de réception discontinue longue.
